(19) Europäisches Patentamt
European Patent Office
Office européen des brevets

(11) EP 4 769 548 A1

(12) **EUROPEAN PATENT APPLICATION**

(43) Date of publication:
**01.07.2026 Bulletin 2026/27**

(21) Application number: **25219380.0**

(22) Date of filing: **28.11.2025**

(51) International Patent Classification (IPC):
***H01M 4/36*** *(2006.01)* ***H01M 4/134*** *(2010.01)*
***H01M 4/38*** *(2006.01)* ***H01M 4/587*** *(2010.01)*
***H01M 4/62*** *(2006.01)*

(52) Cooperative Patent Classification (CPC):
**H01M 4/366; H01M 4/133; H01M 4/134; H01M 4/364; H01M 4/386; H01M 4/587; H01M 4/622; H01M 10/0525;** H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.11.2024 KR 20240175706**
**29.11.2024 KR 20240175707**
**29.11.2024 KR 20240175711**

(71) Applicant: **SAMSUNG SDI CO., LTD.**
**Yongin-si, Gyeonggi-do 17084 (KR)**

(72) Inventors:
- **Moon, Dong Min**
  **16678 Gyeonggi-do, Suwon-si (KR)**
- **Moon, Joong Ho**
  **16678 Gyeonggi-do, Suwon-si (KR)**
- **Oh, Se Young**
  **16678 Gyeonggi-do, Suwon-si (KR)**
- **Cha, Yu Rim**
  **16678 Gyeonggi-do, Suwon-si (KR)**
- **Yu, So Jeong**
  **16678 Gyeonggi-do, Suwon-si (KR)**
- **Cho, Hang In**
  **16678 Gyeonggi-do, Suwon-si (KR)**
- **Shin, Ga In**
  **16678 Gyeonggi-do, Suwon-si (KR)**
- **Kim, Min Kyeong**
  **16678 Gyeonggi-do, Suwon-si (KR)**

(74) Representative: **Meissner Bolte Partnerschaft mbB**
**Patentanwälte Rechtsanwälte**
**Postfach 86 06 24**
**81633 München (DE)**

# (54) NEGATIVE ELECTRODE PLATE FOR RECHARGEABLE LITHIUM BATTERY AND RECHARGEABLE LITHIUM BATTERY INCLUDING THE NEGATIVE ELECTRODE PLATE

(57) A negative electrode plate for a rechargeable lithium battery includes a negative electrode active material. The negative electrode active material includes a mixture of a first negative electrode active material, a second negative electrode active material and a third negative electrode active material. The first negative electrode active material includes natural graphite including secondary particles each formed from primary particles, with an amorphous carbon coating layer surrounding secondary particles, and with the first negative electrode active material has an orientation degree of 90 or less and a d002 of 3.356 Å to 3.360 Å, The second negative electrode active material is graphite. The binder includes a (meth)acrylic based binder.

FIG. 1.

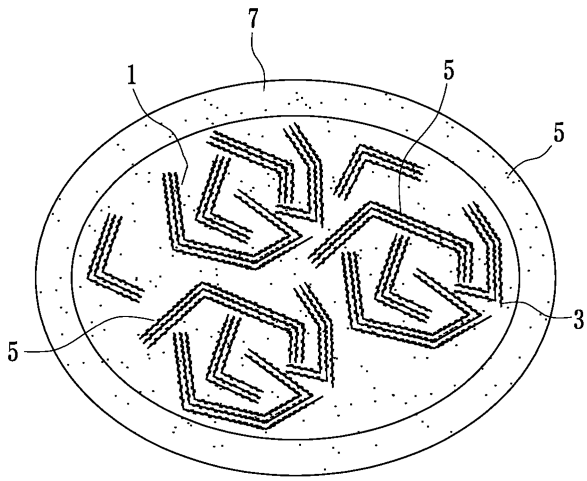


EP 4 769 548 A1

## Description

CROSS-REFERENCE TO RELATED APPLICATION

The present application claims priority and the benefit of Korean Patent Application No. 10-2024-0175706, filed on November 29, 2024, Korean Patent Application No. 10-2024-0175707, filed on November 29, 2024, and Korean Patent Application No. 10-2024-0175711, filed on November 29, 2024, in the Korean Intellectual Property Office.

BACKGROUND

### 1. Field of the Disclosure

The present disclosure relates to a negative electrode plate for a rechargeable lithium battery and a rechargeable lithium battery including the negative electrode plate.

### 2. Discussion of Related Art

With the rapid spread of electronic devices such as mobile phones, notebook computers, and electric vehicles, using batteries, the demand for secondary batteries having high energy density and high capacity has rapidly increased. Therefore, research and development for improving the performance of rechargeable lithium batteries is actively being conducted.

A rechargeable lithium battery includes a positive electrode and a negative electrode that contain an active material capable of the intercalation and deintercalation of lithium ions. A secondary battery produces electric energy by oxidation and reduction reactions when the lithium ions are intercalated into and deintercalated from the positive electrode and the negative electrode.

SUMMARY OF THE DISCLOSURE

The present disclosure is directed to providing a negative electrode plate for a rechargeable lithium battery exhibiting high energy density and a boost charging effect.

The present disclosure is also directed to providing a rechargeable lithium battery including the negative electrode plate.

According to an aspect of the present disclosure, there is provided a negative electrode plate for a rechargeable lithium battery, which includes a negative electrode active material and a binder, wherein the negative electrode active material includes a mixture of a first negative electrode active material, a second negative electrode active material and a third negative electrode active material, the first negative electrode active material includes natural graphite including secondary particles each formed from primary particles, with a coating layer surrounding the secondary particles and including amorphous carbon, and with the negative electrode active material having an orientation degree of 90 or less and a d002 of 3.356 Å to 3.360 Å, the second negative electrode active material is graphite, the third negative electrode active material includes one or more of the following (i), (ii), and (iii):

(i) a negative electrode active material including a core including silicon nanoparticles and amorphous carbon; and an amorphous carbon coating layer surrounding the core and including amorphous carbon;
(ii) a negative electrode active material including a composite of silicon and crystalline carbon; and an amorphous carbon coating layer formed on a surface of the composite and including amorphous carbon; and
(iii) a negative electrode active material including silicon nanoparticles and an amorphous carbon coating layer disposed on surfaces of the silicon nanoparticles and having a sphericity of 0.9 to 1.0; and

the binder includes a (meth)acrylic based binder.

According to another aspect of the present disclosure, there is provided a rechargeable lithium battery including the negative electrode plate for a rechargeable lithium battery and a positive electrode.

BRIEF DESCRIPTION OF THE DRAWINGS

Features and advantages of the present disclosure will become more apparent to those of ordinary skill in the art by to the following description in conjunction with the accompanying drawings.

FIG. 1 is a conceptual diagram of a first negative electrode active material according to an embodiment;

FIG. 2 is a conceptual diagram of a negative electrode active material of a third negative electrode active material according to an embodiment;

FIG. 3 is a conceptual diagram of the interparticle distance in a negative electrode active material of the third negative electrode active material according to an embodiment;

FIG. 4 is a conceptual diagram of a negative electrode active material of the third negative electrode active material according to an embodiment; and

FIGS. 5 to 8 are cross-sectional views schematically showing a rechargeable lithium battery according to embodiments.

DETAILED DESCRIPTION OF EXEMPLARY EMBODIMENTS

Hereinafter, embodiments of the present disclosure will be described in detail. However, the embodiments are presented as examples, and the present disclosure is not limited to the examples.

Unless otherwise specified herein, when a part such as a layer, a film, an area, a plate, etc. is said to be "on" another part, it includes not only the case where it is "directly on" the other part, but also the case where another part is present therebetween.

Unless otherwise specified herein, the singular may also include the plural. In addition, unless otherwise specified, "A or B" may mean "including A," "including B," or "including A and B."

In this specification, "a combination thereof" may mean a mixture, a laminate, a composite, a copolymer, an alloy, a blend, and a reaction product of the components.

Unless otherwise defined herein, the particle size may be an average particle diameter. In addition, the particle size refers to the average size diameter (D50), which is the diameter of particles with a cumulative volume of 50 vol% in the particle size distribution. The average particle size (D50) may be measured by a well-known method to those skilled in the art, for example, using a particle size analyzer, a transmission electron micrograph, or a scanning electron micrograph. As another method, the average particle size may be measured using a measurement device using dynamic light scattering, and an average particle size (D50) value may be obtained by performing data analysis, counting the number of particles in each particle size range, and then calculating the D50 value therefrom. Alternatively, the average particle size may be measured using a laser diffraction method. When measuring the average particle size by the laser diffraction method, more specifically, the average particle size (D50) may be calculated based on 50% of the particle size distribution after dispersing the target particles in a dispersion medium, introducing the particles into a commercially available laser diffraction particle size measuring device (such as MT 3000 from Microtrac), and irradiating the particles with ultrasonic waves of about 28 kHz at an output of 60 W.

When the particle is spherical, the size may mean a diameter.

Particle size can be measured using a particle size analyzer (Beckman Coulter, LS 13 320 XR).

A negative electrode plate for a rechargeable lithium battery according to one exemplary embodiment may provide a long lifespan, high energy density, and a boost charging effect.

The negative electrode plate for a rechargeable lithium battery according to one exemplary embodiment includes a negative electrode active material and a binder, wherein the negative electrode active material includes a mixture of a first negative electrode active material, a second negative electrode active material and a third negative electrode active material, the first negative electrode active material includes natural graphite including secondary particles that are assembled from primary particles, and an amorphous carbon coating layer surrounding the secondary particles, and the first negative electrode active material has an orientation degree of 90 or less and a d002 of 3.356 Å to 3.360 Å, the second negative electrode active material is graphite, the third negative electrode active material includes a core including silicon nanoparticles and amorphous carbon; and an amorphous carbon coating layer surrounding the core and including amorphous carbon, and the binder includes a (meth)acrylic based binder. When the negative electrode plate for a rechargeable lithium battery includes the mixture as a negative electrode active material, the negative electrode plate provides a high capacity retention rate and may also provide high energy density, a boost charging effect, a long lifespan effect, and a low expansion rate (swelling). When the negative electrode plate for a rechargeable lithium battery includes the mixture as the negative electrode active material and a (meth)acrylic binder as the binder, the negative electrode plate may be highly effective in providing energy density, boost charging and long lifespan effects, and a low expansion rate.

In one embodiment, the mixture may be included in an amount of 95% by weight or more, for example, 95 to 100% by weight, 99 to 100% by weight, or 100% by weight, based on the total weight of the negative electrode active material in the electrode plate. Within these ranges, the effects of the above-described electrode plate may be easily achieved.

In other embodiments, the negative electrode active material mixture may be included in an amount of 90% by weight to 99.5% by weight, for example, 95% by weight to 99.5% by weight, or 90% by weight to 99% by weight in the negative electrode plate. Within these ranges, a capacity improvement effect may be achieved.

When the first negative electrode active material is not present in the mixture, the density of the electrode plate may be reduced, which makes it difficult to provide a cell having high energy density and the boost charging effect may be

reduced. When the second negative electrode active material is not present in the mixture, the lifespan effect may be reduced in a high-temperature environment. When the third negative electrode active material is not present in the mixture, the capacity per volume may be lowered.

In some embodiments, the first negative electrode active material may be included in the mixture in an amount of 20 to 75% by weight, for example, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75% by weight, 20 to 65% by weight, or 20 to 60% by weight, the second negative electrode active material may be included in an amount of 20 to 75% by weight, for example, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75% by weight, 20 to 65% by weight, or 20 to 60% by weight, and the third negative electrode active material may be included in an amount of 1 to 20% by weight, for example, 1%, 2%, 3%, 4%, 5%, 6%, 7%, 8%, 9%, 10%, 11%, 12%, 13%, 14%, 15%, 16%, 17%, 18%, 19%, 20% by weight, 1 to 15% by weight, 1 to 10% by weight, or 5 to 7% by weight. Within these ranges, it may be easy to have high energy density, provide a boost charging effect, and improve a boost charging life.

In one specific embodiment, the amount of the third negative electrode active material in the mixture may be 1 to 15% by weight, for example, 1%, 2%, 3%, 4%, 5%, 6%, 7%, 8%, 9%, 10%, 11%, 12%, 13%, 14% ,15% by weight, 1 to 10% by weight, and the sum of the amounts of the first negative electrode active material and the second negative electrode active material may be in the range of 85 to 99% by weight, for example, 85%, 86%, 87%, 88%, 89%, 90%, 91%, 92%, 93%, 94%, 95%, 96%, 97%, 98%, 99% by weight, or 90 to 99% by weight. Within these ranges, a boost charging effect and a boost charging life improvement effect may be achieved.

In one embodiment, the third negative electrode active material may be included with a specific capacity of 500 mAh/g or less.

The weight ratio of the first negative electrode active material and the second negative electrode active material based on a total of 100 parts by weight of the first negative electrode active material and the second negative electrode active material may be in the range of 10:90 to 90:10, for example, 25:75 to 75:25, 40:60 to 60:40, or 50:50. Within these ranges, a boost charging effect and a boost charging life improvement effect may be achieved.

In one specific embodiment, the negative electrode plate may have a density of 1.3 g/cc to 1.7 g/cc, for example 1.3 g/cc to 1.68 g/cc. Within these ranges, high energy density and easy boost charging may be achieved.

Hereinafter, each component of the first negative electrode active material will be described in detail.

**(1) First negative electrode active material**

The first negative electrode active material includes natural graphite including secondary particles that are assembled from primary particles and a coating layer surrounding the secondary particles and including amorphous carbon, wherein the first negative electrode active material has an orientation degree of 90 or less and a d002 of 3.356 Å to 3.360 Å.

In the present disclosure, the term "orientation degree" may refer to the ratio of the diffraction peak intensity I(002) of the (002) plane to the diffraction peak intensity I(110) of the (110) plane, as measured by an X-ray diffraction analysis method using Cu$\alpha$ rays.

In the present specification, the term "d002" may refer to the interplanar spacing of the (002) plane of the first negative electrode active material, as measured by an X-ray diffraction analysis method using Cu$\alpha$ rays.

In general, natural graphite has advantages as a negative electrode active material for batteries, but natural graphite has poor charging characteristics due to its high resistance. Also, due to the large number of internal pores in natural graphite, side reactions may adversely affect the long cycle life and expansion rate.

The first negative electrode active material may be made by significantly reducing the average particle diameter of secondary particles of natural graphite to a small particle form to provide low resistance. And, by calcining the secondary particles at a temperature described below to offset the decrease in efficiency due to the increased specific surface area of the secondary particles, the specific surface area is reduced and high efficiency is provided.

The first negative electrode active material may include the natural graphite, the amorphous carbon, and the coating layer, and satisfies the above-described orientation degree and d002. Therefore, the first negative electrode active material may improve the battery capacity and significantly increase the charge C-rate, thereby enhancing the boost charging performance of the rechargeable lithium battery. Although the first negative electrode active material includes natural graphite, it may significantly reduce resistance, may provide high energy density, suppress side reactions with the electrolyte, and have an improved lifespan.

The lower the orientation degree, the more the edge planes of the natural graphite are oriented in a random direction, which results in an increase in random orientation of the first negative electrode active material. Accordingly, the intercalation and deintercalation of lithium ions into the secondary particles of natural graphite may be facilitated, thereby

improving the capacity characteristics of a rechargeable lithium battery. In examples, the orientation degree may be 80 or less, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 10 to 80, 20 to 80, 30 to 80, 40 to 80, or 50 to 80. The orientation degree may be implemented by controlling the average particle diameter D50 of the secondary particles and the major axis length of the primary particles. In the first negative electrode active material, the average particle diameter D50 of the secondary particles is significantly reduced to improve the high resistance of natural graphite.

As described below, the average particle diameter D50 of the secondary particles in the first negative electrode active material is significantly smaller than the major axis length of the primary particles. The secondary particles may be manufactured by crumpling the primary particles. The first negative electrode active material includes amorphous carbon and may have a high graphitization degree when the first negative electrode active material is made by heat treatment at 2,500 °C or higher as described below. A high graphitization degree may contribute to improving the capacity of the negative electrode active material and may prevent a decrease in efficiency due to a decrease in the average particle diameter and an increase in the specific surface area of the secondary particles. In this regard, the d002 of the first negative electrode active material is 3.356 Å to 3.360 Å. Within this range, the decrease in battery efficiency due to the increase in the specific surface area of the first negative electrode active material including secondary particles having a relatively small average particle diameter D50 may be offset, thereby providing high capacity. For example, the d002 may be 3.356 Å, 3.3561 Å, 3.3562 Å, 3.3563 Å, 3.3564 Å, 3.3565 Å, 3.3566 Å, 3.3567 Å, 3.3568 Å, 3.3569 Å, 3.357 Å, 3.3571 Å, 3.3572 Å, 3.3573 Å, 3.3574 Å, 3.3575 Å, 3.3575 Å, 3.3576 Å, 3.3577 Å, 3.3578 Å, 3.3579 Å, 3.358 Å, 3.3581 Å, 3.3582 Å, 3.3583 Å, 3.3584 Å, 3.3585 Å, 3.3586 Å, 3.3587 Å, 3.3588 Å, 3.3589 Å, 3.359 Å, 3.3591 Å, 3.3592 Å, 3.3593 Å, 3.3594 Å, 3.3595 Å, 3.3596 Å, 3.3597 Å, 3.3598 Å, 3.3599 Å, or 3.360 Å.

According to embodiments, the first negative electrode active material may have an Hg cumulative pore volume of 0.01 to 0.06 mL/g, for example, 0.01 mL/g, 0.02 mL/g, 0.03 mL/g, 0.04 mL/g, 0.05 mL/g, 0.06 mL/g, 0.02 to 0.06 mL/g, or 0.03 to 0.06 mL/g. Within these ranges, significantly higher negative electrode active material efficiency may be achieved due to the small pores, i.e., empty spaces, inside the first negative electrode active material and the appropriate content of amorphous carbon inside the negative electrode active material. Also, the internal area of the first negative electrode active material that reacts with the electrolyte is not excessive and may maintain a level of density that allows the electrolyte to be well impregnated, thereby maintaining an appropriate lifespan without excessive side reactions. Although the negative electrode active material includes small-particle natural graphite, the Hg cumulative pore volume may be a characteristic of the negative electrode active material made by a manufacturing method described below to reduce the specific surface area.

According to one exemplary embodiment, the first negative electrode active material may have a sphericity S of 0.85 or more according to the following Equation 1:

[Equation 1]

$$\text{Sphericity } S = 4\pi \text{ X } A/B^2$$

wherein A represents the area of the first negative electrode active material, and

B represents the perimeter of the shape of the first negative electrode active material. In one exemplary embodiment, B may be the perimeter of the actual shape of the first negative electrode active material.

The sphericity of the first negative electrode active material may be a value obtained by projecting a three-dimensional particle onto a two-dimensional plane. For example, the sphericity may be a ratio of the boundary of the actual particle shape and the boundary of a circle having the same area.

In Equation 1 above, the area of value A refers to the area of a circle having the same circumference as B, which is calculated after a scanning electron microscope (SEM) image of the electrode cross-section is obtained using a controlled pressure scanning electron microscope (CP-SEM SEM) and the actual perimeter (B) of the particle is calculated from the cross-section image using an ImageJ program. In embodiments, the actual perimeter may refer not only to the perimeter when the particle has a spherical shape, but also the length obtained along the perimeter even when the particle is not spherical and has uneven regions.

The first negative electrode active electrode material may have a sphericity of 0.85, 0.86, 0.87, 0.88, 0.89, 0.90, 0.91, 0.92, 0.93, 0.94, 0.95, 0.96, 0.97, 0.98, 0.99, 1.0, 0.90 to 1.0, 0.90 to 0.98, or 0.90 to 0.95. When the sphericity is within these ranges, the expansion rate during charging and discharging may be more effectively suppressed.

The first negative electrode active material may have a pellet density of 1.60 to 1.80 g/cc. Within this range, the internal pores of the first negative electrode active material and side reactions with the electrolyte may be reduced, thereby improving lifespan characteristics. For example, the pellet density may be 1.60 g/cc, 1.61 g/cc, 1.62 g/cc, 1.63 g/cc, 1.64 g/cc, 1.65 g/cc, 1.66 g/cc, 1.67 g/cc, 1.68 g/cc, 1.69 g/cc, 1.70 g/cc, 1.71 g/cc, 1.72 g/cc, 1.73 g/cc, 1.74 g/cc, 1.75 g/cc, 1.76

g/cc, 1.77 g/cc, 1.78 g/cc, 1.79 g/cc, 1.80 g/cc, or range from 1.70 to 1.80 g/cc.

The first negative electrode active material may have a tap density of 0.75 to 1.20 g/cc, for example, 0.75 g/cc, 0.76 g/cc, 0.77 g/cc, 0.78 g/cc, 0.79 g/cc, 0.80 g/cc, 0.81 g/cc, 0.82 g/cc, 0.83 g/cc, 0.84 g/cc, 0.85 g/cc, 0.86 g/cc, 0.87 g/cc, 0.88 g/cc, 0.89 g/cc, 0.90 g/cc, 0.91 g/cc, 0.92 g/cc, 0.93 g/cc, 0.94 g/cc, 0.95 g/cc, 0.96 g/cc, 0.97 g/cc, 0.98 g/cc, 0.99 g/cc, 1.00 g/cc, 1.01 g/cc, 1.02 g/cc, 1.03 g/cc, 1.04 g/cc, 1.05 g/cc, 1.06 g/cc, 1.07 g/cc, 1.08 g/cc, 1.09 g/cc, 1.10 g/cc, 1.11 g/cc, 1.12 g/cc, 1.13 g/cc, 1.14 g/cc, 1.15 g/cc, 1.16 g/cc, 1.17 g/cc, 1.18 g/cc, 1.19 g/cc, 1.20 g/cc, 0.75 to 1.0 g/cc or 0.95 to 1.20 g/cc. Within these ranges, the internal pores of the first negative electrode active material and side reactions with the electrolyte may be reduced, thereby improving lifespan characteristics. The tap density may be obtained by calculating an average value by performing a process of applying a pressure of 108N three times using a GeoPyc 1360 Pycnometer (Micromeritics Instrument Corporatation) having a conversion factor of 0.2907 $cm^3$/mm and a chamber with a diameter of 19.1 mm.

The first negative electrode active material may have a specific surface area of 10 $m^2$/g or less, for example, 1 $m^2$/g, 1.5 $m^2$/g, 2 $m^2$/g, 2.5 $m^2$/g, 3 $m^2$/g, 3.5 $m^2$/g, 4 $m^2$/g, 4.5 $m^2$/g, 5 $m^2$/g, 5.5 $m^2$/g, 6 $m^2$/g, 6.5 $m^2$/g, 7 $m^2$/g, 7.5 $m^2$/g, 8 $m^2$/g, 8.5 $m^2$/g, 9 $m^2$/g, 9.5 $m^2$/g, 10 $m^2$/g, of 1 to 10 $m^2$/g. Within these ranges, the internal pores of the first negative electrode active material and side reactions with the electrolyte may be reduced, thereby improving lifespan characteristics. The specific surface area may be a BETspecific surface area. The BETspecific surface area may be measured using a MACSORB® HM Model-1208 (Mountech Co., Ltd.).

The internal porosity of the first negative electrode active material may be 2 % or less, for example, 0.1 %, 0.2 %, 0.3 %, 0.4 %, 0.5 %, 0.6 %, 0.7 %, 0.8 %, 0.9 %, 1.0 %, 1.1 %, 1.2 %, 1.3 %, 1.4 %, 1.5 %, 1.6 %, 1.7 %, 1.8 %, 1.9 %, 2%, 1.8% or less, 1.5% or less, 1.0 % to 1.5%, or 1.0 % to 1.3%. Within these ranges, side reactions between the first negative electrode active material and the electrolyte may be suppressed, thereby improving the lifespan of the rechargeable lithium battery. In the porosity, the total pore volume and mesopore volume may be quantitatively measured using a Barrett-Joyner-Halenda (BJH) analysis device.

Hereinafter, the first negative electrode active material will be described in detail.

The first negative electrode active material includes natural graphite including secondary particles assembled from primary particles and a coating layer surrounding the secondary particles, with the coating layer including amorphous carbon.

The natural graphite may be flaky (needle-shaped, scale-shaped or flake-type) natural graphite.

The primary particles may have a major axis length of 10 μm to 200 μm, for example, 10 μm, 15 μm, 20 μm, 25 μm, 30 μm, 35 μm, 40 μm, 45 μm, 50 μm, 55 μm, 60 μm, 65 μm, 70 μm, 75 μm, 80 μm, 85 μm, 90 μm, 95 μm, 100 μm, 105 μm, 110 μm, 115 μm, 120 μm, 125 μm, 130 μm, 135 μm, 140 μm, 145 μm, 150 μm, 155 μm, 160 μm, 165 μm, 170 μm, 175 μm, 180 μm, 185 μm, 190 μm, 195 μm, 200 μm, 10 to 100 μm, 30 μm to 60 μm, or 20 μm to 50 μm. Within these ranges, assembly into secondary particles may be facilitated, and the ratio described below may be easily achieved. Here, the term "major axis length" refers to the length of the longest axis between opposing sides when the primary particles are plate-shaped. In some embodiments, the primary particles are plate-shaped, but the present disclosure is not limited thereto.

The secondary particles may have an average particle diameter D50 of 30 μm or less. Within this range, the ratio described below may be easily achieved. For example, the secondary particles may have an average particle diameter D50 of 5 μm or more and 10 μm or less, 5 μm, 6 μm, 7 μm, 8 μm, 9 μm, 10 μm, or 6 μm or more and 8 μm or less. Within these ranges, the above-described orientation degree and sphericity may be easily achieved.

The secondary particles may be spherical, but the present disclsure is not limited thereto.

In one specific embodiment, the ratio of the major axis length of the primary particles to the average particle diameter D50 of the secondary particles may be greater than 2 and less than or equal to 10. Within this range, the resistance of the active material may not increase and boost charging performance may not deteriorate. For example, the ratio may be 2.1, 2.5, 3, 3.5, 4, 4.5, 5, 5.5, 6, 6.5, 7, 7.5, 8, 8.5, 9, 9.5, 10, 3 to 6, 4 to 6, or 5 to 6. Within these ranges, the above-described orientation degree and sphericity described below may be easily achieved.

Amorphous carbon may be contained in the coating layer surrounding the surfaces of the secondary particles. The amorphous carbon may reduce the internal porosity of the negative electrode active material and suppress side reactions between the negative electrode active material and the electrolyte, thereby improving charging/discharging C-rate characteristics. The coating layer including the amorphous carbon may have a thickness of 5 to 50 nm, for example, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, 20 nm, 21 nm, 22 nm, 23 nm, 24 nm, 25 nm, 26 nm, 27 nm, 28 nm, 29 nm, 30 nm, 31 nm, 32 nm, 33 nm, 34 nm, 35 nm, 36 nm, 37 nm, 38 nm, 39 nm, 40 nm, 41 nm, 42 nm, 43 nm, 44 nm, 45 nm, 46 nm, 47 nm, 48 nm, 49 nm, 50 nm, 10 to 50 nm, or 20 to 50 nm. Within these ranges, side reactions with the electrolyte may be suppressed and charging/discharging C-rate characteristics may be improved.

The amorphous carbon may be a mixture of one or more selected from soft carbon, hard carbon, mesophase pitch carbide, and calcined coke. The amorphous carbon may be further present on the surfaces of the primary particles.

Based on a total of 100 parts by weight of natural graphite and amorphous carbon in the first negative electrode active material, the natural graphite and the amorphous carbon may be included in a weight ratio of 90:10 to 75:25, for

example, 90:10 to 80:20, 90:10 to 85:15, or 90:10 to 88:12. Within these ranges, side reactions with the electrolyte may be effectively suppressed and charging/discharging C-rate characteristics may be improved.

Hereinafter, a method of preparing the first negative electrode active material will be described.

(1) Primary particles having the above major axis length are obtained by grinding a natural graphite raw material whose particles have an average particle diameter D50 of 120 μm or more. In one embodiment, the natural graphite raw material may be ground by applying an air jet milling method. The air jet milling may include grinding the natural graphite raw material under conditions of 5 to 20 kg/$cm^2$ at room temperature.

(2) The primary particles are assembled into secondary particles using a spheroidizing device.

The assembling aims to reach a sphericity of 0.85 or higher and may be performed using a high-intensity mixer equipped with a high-speed rotating rotor and a stator. In the spheroidization process, the average particle diameter D50 of the secondary particles may be controlled by varying the pressure, shear rate, and the like.

(3) The produced secondary particles are mixed with an amorphous carbon precursor.

The amorphous carbon precursor is not limited as long as it is a material that forms a carbide. For example, the precursor may include one or more of a phenol resin, a furan resin, an epoxy resin, a polyacrylonitrile resin, a polyamide resin, a polyimide resin, a polyamideimide resin, synthetic pitch, petroleum pitch, coal pitch, and tar.

In the mixing, the natural graphite and amorphous carbon in the final product, i.e., the negative electrode active material, may be added so that the natural graphite and amorphous carbon may be present in the above-described weight ratio.

(4) The first negative electrode active material is obtained by calcining and heat-treating the mixture obtained by the mixing.

The heat treatment may be performed at 2,500 °C or higher, for example, 2,500°C to 3,500°C, for example, 2,500°C to 3,000°C. Within these ranges, the negative electrode active material including the secondary particles satisfying the above-described ratios may be heat-treated to easily reach the above orientation degree, d002, and sphericity.

The heat treatment may be maintained for 1 to 5 hours, for example, 1 to 4 hours, 1 to 3 hours, or 2 to 3 hours.

FIG. 1 is a conceptual diagram of a first negative electrode active material according to an embodiment.

Referring to FIG. 1, the first negative electrode active material includes natural graphite including secondary particles 3 that are formed from a plurality of primary particles 1; amorphous carbon 5 present on surfaces of the primary particles 1; and a coating layer 7 surrounding the secondary particles 3 and including amorphous carbon 5. Referring to FIG. 1, because the secondary particles 3 are assembled by spherically forming the primary particles 1 in a bent shape, natural graphite has a smaller size and a dense internal structure. As such, internal pores may be minimized, side reactions with the electrolyte may be reduced, and the cycle lifespan may be improved.

### (2) Second negative electrode active material

The second negative electrode active material may be graphite. In one embodiment, the second negative electrode active material may be one or more of natural graphite and artificial graphite. For example, the second negative electrode active material may be artificial graphite.

The artificial graphite may have an average particle diameter D50 of 10 μm to 20 μm, for example, 13 μm to 18 μm, or 15 μm to 20 μm. Within these range, the specific surface area may not increase significantly, thereby suppressing an increase in side reactions with the electrolyte and preventing the boost charging performance from deteriorating. In some embodiments, the artificial graphite may have a maximum particle diameter of 30 μm to 40 μm.

In some embodiments, the artificial graphite may have a pellet density lower than that of the first negative electrode active material. For example, the artificial graphite may have a pellet density of 1.1 to 1.6 g/cc or 1.1 to 1.5 g/cc.

In some embodiments, the artificial graphite may have a tap density lower than that of the first negative electrode active material. For example, the artificial graphite may have a tap density of 0.5 to 1.0 g/cc or 0.5 to 0.9 g/cc.

In some embodiments, the artificial graphite may have a specific surface area of 10 $m^2$/g or less, for example, 1 to 10 $m^2$/g. The specific surface area may be a BET specific surface area.

In some embodiments, the artificial graphite may have an orientation degree of 90 or more. For example, the artificial graphite may have an orientation degree of 90 to 100, or greater than 90 and 100 or less.

The artificial graphite may have, but is not limited to, a spherical shape. The artificial graphite may be one or more of single particles, primary particles, secondary particles assembled from primary particles, and tertiary particles assembled from secondary particles. In one specific embodiment, the secondary particles may also include a coating layer including amorphous carbon on the surfaces.

**(3) Third negative electrode active material**

The third negative electrode active material may be a silicon-based negative electrode active material and include one or more of the following (i), (ii), and (iii):

(i) a negative electrode active material including a core including silicon nanoparticles and amorphous carbon; and an amorphous carbon coating layer surrounding the core and including amorphous carbon,
(ii) a negative electrode active material including a composite of silicon and crystalline carbon; and an amorphous carbon coating layer formed on a surface of the composite and including amorphous carbon, and
(iii) a negative electrode active material including silicon nanoparticles and an amorphous carbon coating layer formed on surfaces of the silicon nanoparticles, with the negative electrode active material having a sphericity of 0.9 to 1.0.

**(i) Negative electrode active material**

The negative electrode active material (i) includes a core including silicon nanoparticles and amorphous carbon and an amorphous carbon coating layer surrounding the core and including amorphous carbon.
In one embodiment, the negative electrode active material may be a binary negative electrode active material including silicon and amorphous carbon.
In the negative electrode active material, the interparticle distance between the silicon nanoparticles included in the core may be 100 nm or less, 90 nm or less, 80 nm or less, 70 nm or less, 65 nm or less, 60 nm or less, 55 nm or less, 50 nm or less, 45 nm or less, 40 nm or less, or 35 nm or less. When the interparticle distance between the silicon nanoparticles falls within these ranges, the size and total pore volume of the pores included in the core may be reduced. When the interparticle distance between the silicon nanoparticles is within these ranges, the volume of the pores present in the negative electrode active material may be reduced, and the interparticle distance between the silicon nanoparticles may be narrowed, thereby preventing the electrolyte from penetrating into the core during battery operation. As a result, side reactions between the electrolyte and the negative electrode active material may be suppressed, thereby improving the battery lifespan.
Here, the interparticle distance between the silicon nanoparticles refers to the distance between the centers of the silicon nanoparticles. Referring to FIG. 3, the silicon nanoparticle 2 has a minor axis length a and a major axis length b. Thus, in this case, the interparticle distance d is the distance between the centers of the silicon nanoparticles 2 as depicted. The interparticle distance between the silicon nanoparticles may mean that the numbers of silicon nanoparticles having an interparticle distance in the above ranges are 50% to 100%, for example, 60% to 100%, 70% to 100%, or 80% to 100% of the total number of the silicon nanoparticles included in the core.
The silicon nanoparticles may have an average particle diameter D50 of 50 nm to 150 nm, for example, 50 nm or more, 60 nm or more, 70 nm or more, or 80 nm or more, and 150 nm or less, 140 nm or less, 130 nm or less, or 115 nm or less. When the average particle diameter D50 of the silicon nanoparticles falls within these ranges, side reactions with the electrolyte may be suppressed and the expansion of the silicon nanoparticles may be reduced, thereby improving the initial efficiency and lifespan characteristics.
The silicon nanoparticles may have a full width at half maximum (FWHM) of 0.3° to 7° at an X-ray diffraction angle ($2\theta$) on the (111) plane using CuK$\alpha$ rays. With such characteristics, lifespan may be improved. The FWHM of the silicon nanoparticles at the X-ray diffraction angle ($2\theta$) on the (111) plane using CuK$\alpha$ rays may be controlled by adjusting the size of the silicon particles or changing the silicon nanoparticle manufacturing process.
The silicon nanoparticles may have an aspect ratio of 2 to 8, for example, 2 to 6, and the silicon nanoparticles may have a minor axis length a of 20 nm to 50 nm and a major axis length a of 50 nm to 300 nm. When the aspect ratio, the major axis length b, and the minor axis length a of the silicon nanoparticles fall within these ranges, side reactions between the negative electrode active material and the electrolyte may be suppressed and the expansion of the silicon nanoparticles may be reduced, thereby improving the initial efficiency and lifespan characteristics.
The silicon nanoparticles may be included in an amount of 20% by weight to 80% by weight, 30% by weight to 70% by weight, 30% by weight to 60% by weight, or 30% by weight to 50% by weight based on the total weight of the negative electrode active material. When the amount of the silicon nanoparticles is within these ranges, battery capacity may be improved.
The amorphous carbon included in the core may be soft carbon, hard carbon, mesophase pitch carbide, calcined coke, or a combination thereof. When the amorphous carbon is included in the core, the pore volume of the negative electrode active material may be reduced, thereby suppressing side reactions with the electrolyte. Also, the expansion of the silicon nanoparticles within the negative electrode active material may be buffered, thereby suppressing battery swelling. In addition, the amorphous carbon may function as a binder such that breakage of the negative electrode active material may be mitigated and the shape of the negative electrode active material may be maintained.
The coating layer may include amorphous carbon and may have a thickness of 1 nm to 900 nm, for example, 5 nm

to 800 nm. Such a thickness may reduce the specific surface area of the negative electrode active material and prevent the electrolyte from being introduced into the negative electrode active material. As a result, side reactions with the electrolyte may be minimized and the lifespan characteristics of the battery may be improved.

The amorphous carbon included in the coating layer may be soft carbon, hard carbon, mesophase pitch carbide, calcined coke, or a combination thereof, and may be a compound which is the same as or different from the amorphous carbon contained in the core.

The amorphous carbon may be included in an amount of 20% by weight to 80% by weight, for example, 20% by weight to 70% by weight, 20% by weight to 60% by weight, 20% by weight to 50% by weight, or 20% by weight to 40% by weight, based on the total weight of the negative electrode active material. When the amount of the amorphous carbon is within these ranges, side reactions between the negative electrode active material and the electrolyte may be suppressed.

The negative electrode active material according to one embodiment may have an average particle diameter D50 of 2 μm to 15 μm, for example, 3 μm to 13 μm, or 5 μm to 10 μm. When the average particle diameter of the negative electrode active material is within these ranges, lithium ions may easily diffuse into the negative electrode active material, thereby improving battery resistance and C-rate characteristics. Also, side reactions with the electrolyte may be reduced by suppressing an excessive increase in the specific surface area of the negative electrode active material.

The average particle diameter D50 of the negative electrode active material may be appropriately adjusted by controlling the disintegration conditions and grinding conditions during the manufacture of the negative electrode active material.

In the negative electrode active material, the pores having a size of 200 nm or less may have a total pore volume of 3.0 x $10^{-2}$ $cm^3/g$ or less, for example, 2.5 x $10^{-2}$ $cm^3/g$ or less, 2.3 x $10^{-2}$ $cm^3/g$ or less, 2.0 x $10^{-2}$ $cm^3/g$ or less, 1.9 x $10^{-2}$ $cm^3/g$ or less, 1.8 x $10^{-2}$ $cm^3/g$ or less, 1.7 x $10^{-2}$ $cm^3/g$ or less, 1.6 x $10^{-2}$ $cm^3/g$ or less, 1.5 x $10^{-2}$ $cm^3/g$ or less, 1.4 x $10^{-2}$ $cm^3/g$ or less, 1.3 x $10^{-2}$ $cm^3/g$ or less, 1.2 x $10^{-2}$ $cm^3/g$ or less, 1.1 x $10^{-2}$ $cm^3/g$ or less, 1.0 x $10^{-2}$ $cm^3/g$ or less, 0.9 x $10^{-2}$ $cm^3/g$ or less, 0.8 x $10^{-2}$ $cm^3/g$ or less, 0.7 x $10^{-2}$ $cm^3/g$ or less, 0.6 x $10^{-2}$ $cm^3/g$ or less, or 0.5 x $10^{-2}$ $cm^3/g$ or less. Within these ranges, side reactions between the electrolyte and the silicon nanoparticles may be suppressed, thereby improving the initial efficiency and lifespan characteristics.

The total pore volume of the pores having a size of 200 nm or less may be quantitatively measured using a Barrett-Joyner-Halenda (BJH) analysis device.

The negative electrode active material may have a pore size of 200 nm or less, for example, 170 nm or less, 150 nm or less, 130 nm or less, 100 nm or less, or 50 nm or less. When the pore size is within these ranges, side reactions between the electrolyte and the silicon nanoparticles may be reduced, and a battery having improved initial efficiency and lifespan characteristics may be obtained.

The negative electrode active material may have a BET specific surface area of 10 $m^2/g$ or less. When the BET specific surface area is within this range, side reactions with the electrolyte may be suppressed, thereby improving the efficiency characteristics of the battery.

In the negative electrode active material, the silicon nanoparticles, and the amorphous carbon may be included in a weight ratio of 80:20 to 20:80, for example, 70:30 to 30:70, 70:30 to 40:60, or 70:30 to 50:50 based on a total of 100 parts by weight of the silicon nanoparticles and the amorphous carbon. When the silicon nanoparticles and the amorphous carbon are within these ranges, the internal pore volume may be reduced and the amorphous carbon may be uniformly dispersed inside and on the surface of the negative electrode active material. As a result, side reactions with the electrolyte may be suppressed and the performance of the negative electrode active material may be improved.

A method of preparing the negative electrode active material according to an embodiment of the present disclosure will be described.

The method of preparing the negative electrode active material includes mixing and dispersing silicon nanoparticles and amorphous carbon to prepare a mixture; spraying, drying, and compressing the mixture to manufacture a molded body; and heat-treating the molded body.

Silicon nanoparticles and amorphous carbon are mixed and dispersed to prepare a mixture. The silicon nanoparticles and the amorphous carbon are as described above.

The prepared mixture is sprayed, dried, and then compressed to make a molded body.

The drying may be performed at 50°C to 150°C using a spray dryer.

The compression may be performed at a pressure of 50 MPa to 150 MPa, for example, 75 MPa to 150 MPa or 75 MPa to 125 MPa. When the molded body is compressed within these pressure ranges, the spacing between the silicon nanoparticles may be appropriately maintained and the volume of the pores formed inside the negative electrode active material may be controlled, thereby suppressing side reactions between the electrolyte and the silicon nanoparticles and improving the initial efficiency and lifespan characteristics.

The molded body is heat-treated to prepare the negative electrode active material. The heat treatment may be performed at a temperature of 700°C to 1,100°C, for example, 800°C to 1,050°C or 900°C to 1,000°C. When the heat treatment is performed within these temperature ranges, the strength of the negative electrode active material may be enhanced as the amorphous carbon is carbonized. Also, the conductivity of the negative electrode active material may be

improved, and the initial efficiency of the battery may be improved.

The heat treatment may be performed under a nitrogen ($N_2$) atmosphere in a furnace.

In one embodiment, the negative electrode active material may have a sphericity of 0.7 or more, and 0.7 or more and 1.0 or less. Here, the sphericity refers to the ratio (Lb/La) of the minor axis length (Lb) to the major axis length (La) when the negative electrode active material has a circular or elliptical shape.

In some embodiments, the negative electrode active material may have an elliptical or circular cross-section. Therefore, a sphericity of 1.0 means that the negative electrode active material is substantially perfectly spherical. Accordingly, it should understood that the maximum value of sphericity is 1.0 (cannot exceed 1.0).

When the sphericity of the negative electrode active material is 0.7 or more, the surface area of the negative electrode active material may be reduced. Thus, since the area in which the negative electrode active material comes into contact with the electrolyte or the area in which the negative electrode active material reacts with lithium is reduced, side reactions with the electrolyte may be reduced, and reactions with lithium may also be reduced. Also, volume expansion may also be reduced by the uniform expansion of the active material in the negative electrode.

The effect of this decrease in surface area may be more effective when the BET specific surface area of the negative electrode active material is 10 $m^2/g$ or less, for example, from 0.5 $m^2/g$ to 10 $m^2/g$. When the BET specific surface area value of the negative electrode active material is 10 $m^2/g$ or less, for example, 0.5 $m^2/g$ to 10 $m^2/g$, there may be improved performance and the initial efficiency may be enhanced by reducing the contact with the electrolyte to suppress side reactions. That is, because the negative electrode active material according to one embodiment has a sphericity of 0.7 or greater and a BET specific surface area of 10 $m^2/g$ or less, the negative electrode active material may be an active material in which side reactions with the electrolyte are reduced and reactions with lithium are also reduced.

In the negative electrode active material, the silicon nanoparticles are primary particles, and these primary particles may be included in the silicon-carbon composite in the form of secondary particles formed from at least one primary particle. Accordingly, the silicon-carbon composite may include secondary particles into which Si nanoparticles are assembled.

In some embodiments, the silicon nanoparticles may be a flaky type, a spherical shape, or the like. But the present disclosure is not limited to these examples. Also, the secondary particles assembled from one or more primary particles may have a spherical shape.

The amorphous carbon may be disposed to cover the surfaces of the secondary particles. That is, the negative electrode active material may include a core including the silicon nanoparticles, and according to one example, may include a secondary particle core assembled from one or more primary particles, which are silicon nanoparticles, with amorphous carbon surrounding the core. Here, the core refers to a region disposed inside the active material. More specifically, the core refers to a region that is substantially not exposed to an outside because the core is surrounded by amorphous carbon. Therefore, the core may be referred to as a region disposed inside the amorphous carbon that surrounds the core.

The amorphous carbon may be filled between the primary particles such that the amorphous carbon covers the surfaces of the primary particles. When the amorphous carbon is filled between the primary particles, the pore volume of the negative electrode active material may be reduced, thereby suppressing side reactions with the electrolyte. Also, when the primary particles expand, the amorphous carbon may function to buffer this expansion. In addition, when the amorphous carbon filled between the primary particles functions as a binder, the amorphous carbon may have advantages of preventing the negative electrode active material particles from breaking and improving conductivity.

The amorphous carbon may be soft carbon, hard carbon, mesophase pitch carbide, calcined coke, or a combination thereof.

The silicon nanoparticles may be flaky. That is, the silicon nanoparticles may have a flake shape having a major axis and a minor axis. The major axis/minor axis ratio, for example, the width/thickness ratio, of the silicon particles may range from 5 to 20. When the major axis/minor axis ratio of the silicon particles falls within this range, the expansion of the Si nanoparticles may be reduced, thereby improving the initial efficiency and lifespan characteristics of a battery including the active material.

The silicon nanoparticles may have a particle diameter of 10 nm to 200 nm. The particle diameter may be the average particle diameter of the particles. Here, the average particle size may refer to the particle diameter D50 measured by cumulative volume. Unless otherwise defined in the present disclosure, this particle diameter D50 refers to the average particle diameter D50 representing the diameters of particles having a cumulative volume of 50% by volume in the particle size distribution. When the size of the Si nanoparticles falls within the above range, side reactions between the negative electrode active material and the electrolyte may be suppressed and the expansion of the Si nanoparticles may be reduced, thereby improving the initial efficiency and lifespan characteristics of the battery.

When the silicon nanoparticles are secondary particles into which one or more primary particles are assembled, the secondary particles may have a particle size of 2 μm to 15 μm or a particle size of 5 μm to 10 μm. In addition, the primary particles may have a particle size of 10 nm to 200 nm. When the average particle size of the negative electrode active material is within these ranges, lithium ions may easily diffuse into the negative electrode active material, and the electrical

resistance and C-rate characteristics may be improved.

In one embodiment, the full width at half maximum (FWHM) (111) of diffraction peaks on the (111) plane of the silicon particles as measured by X-ray diffraction using CuKα rays may be 0.3 degrees (°) to 7 degrees (°). When the FWHM (111) of the Si particles falls within this range, the lifespan characteristics of the battery may be improved.

The X-ray diffraction measurement may be performed using CuKα rays as target rays. In this case, the measurement is performed under the measurement conditions of 2θ = 40° to 50°, a scan speed (°/S) of 0.04 to 0.06, and a step size (°/step) of 0.01 to 0.03.

The mixing ratio of the silicon nanoparticles and the amorphous carbon may be a weight ratio of 8:2 to 2:8, and may be a weight ratio of 7:3 to 5:5. In one embodiment, because the silicon nanoparticles are present in the negative electrode active material in the form of secondary particles assembled from silicon nanoparticles, the mixing ratio of the silicon nanoparticles and the amorphous carbon may be regarded to as a mixing ratio of the secondary particles and the amorphous carbon. When the mixing ratio of the silicon nanoparticles and the amorphous carbon falls within the above ranges, there may be better capacity, particularly a higher capacity compared to a crystalline carbon negative electrode active material.

The amorphous carbon may be present as a coating layer that coats the surfaces of the secondary particles and may also be filled between the primary particles. Regardless of whether the amorphous carbon is filled between the primary particles or present as a coating layer, or present in any other form, the total amount of the amorphous carbon included in the negative electrode active material may be 20 to 80% by weight based on a total of 100% by weight of the negative electrode active material.

In one embodiment, when the amorphous carbon is present as a coating layer that coats and surrounds the surfaces of the secondary particles, the amorphous carbon may be present on the surfaces of the secondary particles with a thickness of 1 nm to 1,000 nm, for example, a thickness of 30 nm to 200 nm. When the thickness of the amorphous carbon layer falls within these ranges, the conductivity of the negative electrode active material may be further improved, and the contact with the electrolyte may be reduced, thereby effectively suppressing an increase in resistance due to the generation of side reaction products.

In one embodiment, the negative electrode active material may have a particle diameter of 40 μm or less, for example, a particle diameter of 2 μm to 15 μm. When the particle diameter of the negative electrode active material falls within these ranges, lithium ions may easily diffuse into the negative electrode active material, and the battery resistance and C-rate characteristics may be improved.

The negative electrode active material according to one embodiment may be made by the following process.

First, silicon particles are prepared. These silicon particles may be nanoparticles and may be have a particle diameter of 10 nm to 200 nm. These nanometer-sized silicon particles may be obtained by a conventional process of producing nanoparticles, such as a grinding process. The full width at half maximum (FWHM) (111) of the diffraction peak on the (111) plane of the silicon nanoparticles as measured by X-ray diffraction using CuKα rays may be 0.3 degrees to 7 degrees.

The silicon particles are dispersed in a solvent to prepare a silicon particle solution. As the solvent, any alcohol that is easily volatilized without oxidizing the silicon particles may be used. For example, isopropyl alcohol, ethanol, methanol, butanol, or a combination thereof may be used as the solvent. The concentration of the silicon particle dispersion is set to 10 to 30% by weight.

The prepared silicon particle solution is spray-dried. Through this process, nanometer-sized silicon particles (primary particles) are assembled to make micrometer-sized spherical Si secondary particles. The secondary particles may include internal pores, i.e., gaps between the primary particles. This spray drying process may control the sphericity of the manufactured negative electrode active material based on the type of nozzle and the atmosphere used. That is, it is desirable to use a two-fluid nozzle capable of forming fine particles by mixing two fluids (liquid and gas). When the two-fluid nozzle is used, fine and spherical particles may be formed. Since the formed particles are small, an additional grinding process is not required. Thus, it possible to maintain the spherical shapes. When a disk-type nozzle that sprays while rotating is used as the nozzle, large particles are formed, and an additional grinding process is required due to the large particle size. Also, particles having various shapes such as spherical, elliptical, and donut-type shapes are formed, which is not desirable.

The spray drying process is preferably carried out under a $N_2$ atmosphere, for example, by blowing $N_2$ at a flow rate of 40 L/min to 50 L/min or a flow rate of 30 L/min to 40 L/min. When the flow rate of $N_2$ in the spray drying process falls within these ranges, spherical microparticles having an appropriate size may be formed. When the flow rate of $N_2$ is less than 30 L/min, the sprayed products may agglomerate, resulting in an increased size of the particles, which is not desirable. On the other hand, when the flow rate of $N_2$ is greater than 50 L/min, there may be a problem that the size of the manufactured particles is too small and a large amount of fine powder is generated.

The spray drying process may be carried out at 120 °C to 170 °C. When the spray drying process is carried out in this temperature range, the temperature is sufficiently higher than the boiling point of the solvent. Thus, micro-sized spherical Si particles may be sufficiently dried through rapid volatilization, which is desirable.

The micrometer-sized Si secondary particles having a spherical shape, into which the resulting Si primary nanoparticles are assembled, are mixed with an amorphous carbon precursor. The mixing ratio of the secondary particles and the amorphous carbon precursor may be a weight ratio of 80:20 to 20:80, or may also be a weight ratio of 60:40 to 50:50.

The amorphous carbon precursor may be a polyimide resin, a furan resin, a phenol resin, a polyvinyl alcohol resin, a poly(meth)acrylic acid resin, a polyurethane resin, a cellulose resin, an epoxy resin, a polystyrene resin, petroleum pitch, coal pitch, green coke, mesophase pitch, coal oil, petroleum heavy oil, coke, or a combination thereof.

The resulting mixture is compression-molded. This compression molding process may be performed under a pressure such that the spherical shape of the micrometer-sized Si secondary particles is maintained. The pressure may be, for example, 20 MPa to 150 MPa. Also, the compression molding process may be performed for 1 to 5 minutes. As the compression molding process is performed, the micrometer-sized spherical Si secondary particles and the amorphous carbon precursor may be firmly attached to each other, and the amorphous carbon precursor may be easily inserted between the primary particles. Accordingly, since the amorphous carbon precursor is inserted into the pores formed inside the secondary particles, the amorphous carbon may be present between the primary particles in an appropriate amount (appropriate thickness) in the final active material. As a result, a coating layer may be formed on the surfaces of the secondary particles so that the amorphous carbon has an appropriate thickness. When the compression molding process is not performed, the micrometer-sized spherical secondary particles and the amorphous carbon precursor may not be strongly attached to each other, and the amorphous carbon precursor is also not easily inserted between the primary particles and instead be mostly provided on the surfaces of the secondary particles. As a result, the amorphous carbon in the final negative electrode active material is present in an excessively thick thickness on the surfaces of the secondary particles, which is not desirable.

The resulting compression-molded product is heat-treated to make a negative electrode active material for a rechargeable lithium battery. The heat treatment process may be performed at 400 °C to 1,200 °C, or at 700 °C to 1,000 °C. When the heat treatment process is performed in these temperature ranges, the shape of the negative electrode active material may be maintained in a spherical shape. Also, as the amorphous carbon is carbonized, the conductivity of the negative electrode active material may be improved and the initial efficiency of the battery may be improved. The heat treatment process may be performed under a $N_2$ atmosphere. As the amorphous carbon precursor is converted to amorphous carbon through this heat treatment process, the amorphous carbon precursor is included as amorphous carbon in the negative electrode active material.

FIG. 2 is a conceptual diagram of the negative electrode active material according to an embodiment.

Referring to FIG. 2, the negative electrode active material includes a core 4 including amorphous carbon and silicon nanoparticles 2; and a coating layer 6 surrounding the core 4. In the depicted embodiment, pores 8 are included in the core.

**(ii) Negative electrode active material**

The negative electrode active material (ii) includes a composite of silicon and crystalline carbon. An amorphous carbon coating layer is formed on a surface of the composite and including amorphous carbon.

In one embodiment, the negative electrode active material may be a ternary negative electrode active material including silicon, crystalline carbon and amorphous carbon.

In one embodiment, the negative electrode active material may include a composite core of silicon and crystalline carbon, and an amorphous carbon coating layer formed on a surface of the core. The amorphous carbon may be present in the core, and the amorphous carbon may be in contact with each of the silicon and crystalline carbon in the core.

The negative electrode active material may have an aspect ratio of 1 to 2.5, for example, 1 to 2. In this range, the negative electrode active material may expand in a more uniform direction, and the expansion of the negative electrode active material in the electrode may be effectively reduced. The aspect ratio may be measured from a photograph taken using a controlled pressure scanning electron microscope (CP-SEM). The aspect ratio refers to the ratio of the maximum major axis length to the maximum minor axis length of the negative electrode active material.

The composite of silicon and crystalline carbon may have an aspect ratio of 1 to 2.5, for example, 1 to 2. Within these ranges, the negative electrode active material may expand in a more uniform direction, and the expansion of the negative electrode active material in the electrode may be effectively reduced. The aspect ratio may be measured from a photograph taken using a CP-SEM. The aspect ratio refers to the ratio of the maximum major axis length to the maximum minor axis length of the composite.

The composite of silicon and crystalline carbon may include pores. The pores may be tubular or plate-shaped and may also form a network within the core. In the composite of silicon and crystalline carbon, the porosity may be appropriately controlled. For example, the porosity (total pore volume) may be 2 to 50% by volume.

The negative electrode active material may include a crystalline carbon core having pores formed therein, an amorphous carbon shell formed on the surface of the core, silicon particles dispersed in the pores, and amorphous carbon

present in the pores.

The weight ratio of the silicon and the crystalline carbon in the composite of silicon and crystalline carbon may range from 10:90 to 90:10 based on a total of 100 parts by weight of the silicon and the crystalline carbon. Within these ranges, a better capacity, particularly a higher capacity compared to a negative electrode active material made of crystalline carbon, may be provided. For example, the weight ratio may be 50:50 to 80:20, and a higher capacity may be exhibited in this range.

The silicon may be spherical and have an average particle diameter D50 of 10 to 150 nm, for example, 40 to 120 nm. Within these ranges, the cycle lifespan characteristics of the battery may be improved.

The silicon may be silicon (Si) particles.

The crystalline carbon may have a major axis length of 5 μm to 20 μm, for example, 5 μm to 10 μm, and an aspect ratio of 4 to 10, for example, 4 to 8. Within these ranges, the cycle lifespan characteristics of the battery may be improved, and since the negative electrode plate does not experience excessive volume expansion during charging and discharging of the rechargeable lithium battery, swelling does not occur. The aspect ratio may be measured by a CP-SEM method. The aspect ratio is the ratio of the maximum major axis length to the maximum minor axis length.

The crystalline carbon may be natural graphite, artificial graphite, or a combination thereof.

The crystalline carbon may be in the form of a rod having an elliptical cross-section.

The amorphous carbon coating layer may be formed on a surface of the composite to improve the conductivity of the composite, thereby further improving performance. The amorphous carbon coating layer on the surface of the composite may also reduce direct contact between silicon and the electrolyte, thereby effectively suppressing an increase in resistance due to the generation of side reaction products.

The amorphous carbon coating layer may have a thickness of 5 nm to 1,000 nm, for example, 5 nm to 30 nm. Within these ranges, the thickness level of the layer may be a level at which there is no problem with electron transfer resistance.

The amorphous carbon in the amorphous carbon coating layer and the amorphous carbon present in the core may be petroleum pitch, coal pitch, or a combination thereof.

The amount of the amorphous carbon coating layer in the negative electrode active material may range from 10 % to 60 % by weight of the negative electrode active material. Within this range, the performance of the battery may be improved.

The negative electrode active material may include 20 % to 70 % by weight of silicon, 3 % to 50% by weight of crystalline carbon, and 20 % to 50% by weight of amorphous carbon. Within this range, the expansion of the negative electrode active material due to charging and discharging may be effectively suppressed, and cycle lifespan and output characteristics may be improved.

FIG. 4 is a conceptual diagram of the negative electrode active material according to an embodiment.

Referring to FIG. 4, the negative electrode active material includes silicon particles 11 crystalline carbon 13, and amorphous carbon 15. The amorphous carbon 15 is present between the silicon particles 11 and the crystalline carbon 13. The amorphous carbon 15 may also be present in the coating layer surrounding the silicon particles 11and the crystalline carbon 13.

Hereinafter, a method of preparing the negative electrode active material will be described.

The negative electrode active material may be prepared by mixing silicon particles, artificial graphite, and amorphous carbon in a solvent to prepare a mixed solution, and spray-drying and heat-treating the mixture. The solvent may be isopropyl alcohol, ethanol, methanol, or a combination thereof. The spray drying may be performed at 90 to 120 °C, and the heat treatment may be performed at 900 to 1,000 °C in a nitrogen atmosphere, an argon atmosphere, a hydrogen atmosphere, or a combination thereof.

### (iii) Negative electrode active material

The negative electrode active material (iii) includes silicon nanoparticles and an amorphous carbon coating layer disposed on surfaces of the silicon nanoparticles.

In one embodiment, because the negative electrode active material has a spherical shape, the negative electrode active material may be well dispersed throughout the negative electrode plate, thereby reducing the expansion rate of the negative electrode plate during charging and discharging. Also, when the negative electrode active material is mixed and used with crystalline carbon, i.e., the first negative electrode active material, the spherical negative electrode active material may be more easily inserted between the crystalline carbon molecules,. Thus, the first negative electrode active material may be better dispersed throughout the negative electrode.

The negative electrode active material may have a sphericity S of 0.9 to 1.0 according to Equation 1 above. Within this range, it may be easy to reduce the expansion rate of the negative electrode plate during charging and discharging.

The negative electrode active material according to one embodiment may also have a sphericity of 0.92 to 0.98 or 0.92 to 0.95. When the sphericity of the negative electrode active material falls within this range, the expansion rate of the

negative electrode plate may be more effectively suppressed during charging and discharging.

The negative electrode active material may include pores, and the pores may include mesopores. Here, mesopores refers to pores having a pore size of 2 nm to 50 nm. When the negative electrode active material includes mesopores, the effect of the negative electrode plate according to the present disclosure may be significant.

The negative electrode active material having the above-described sphericity and mesopores may easily provide a long lifespan, high energy density, and a boost charging effect at the same time when the above-described first negative electrode active material is mixed with the above-described second negative electrode active material.

In one embodiment, the negative electrode active material may also include macropores having a pore size of greater than 50 nm as the pores. Because pores having a pore size of greater than 50 nm are classified as macropores, there is no need to limit the maximum value of the macropores, but the pore size may be up to 500 nm. It is desirable that such macropores are included in an amount of 1% by volume or less with based on the total pore volume. In this case, the macropores may be present in an amount of at least 0 % by volume. That is, the macropores may not be actually present within the negative electrode active material.

In one embodiment, the negative electrode active material may also include micropores having a pore size of greater than 0 nm and less than 2 nm as pores. The micropores included in the negative electrode active material may correspond to the volume excluding the mesopores in the total pore volume (%), or to the volume excluding the mesopores and the macropores when the pores further include macropores.

Herein, the term "pore size" refers to the diameter of a pore having a circular cross-section, or the length of the longest axis on the cross-section when the cross-section of the pore is not circular.

In one embodiment, the negative electrode active material may have a ratio of the mesopore volume to the total pore volume of the negative electrode active material ((mesopore volume/total pore volume) x 100) that is in the range of 30% or more and less than 70%. Within this range, a long lifespan, high energy density, and a boost charging effect may be further improved. For example, the ratio may be 30% to 68%.

The total pore volume may be the total volume of pores including mesopores formed in the negative electrode active material, regardless of the pore size. In one embodiment, the total pore volume may range from 0.001 $cm^3/g$ to 0.01 $cm^3/g$, or may also range from 0.005 $cm^3/g$ to 0.05 $cm^3/g$.

The total pore volume and mesopore volume may each be quantitatively measured using a Barrett-Joyner-Halenda (BJH) analysis device.

The negative electrode active material may have a span value of 1.1 to 1.6 according to the following Equation 2:

[Equation 2]

$$\text{Span} = (D90-D10)/D50$$

wherein:

D10 represents the particle size of the negative electrode active material particles having a cumulative volume of 10% by volume in the particle size distribution,

D50 represents the particle size of the negative electrode active material particles having a cumulative volume of 50% by volume in the particle size distribution, and

D90 represents the particle size of the negative electrode active material particles having a cumulative volume of 90% by volume in the particle size distribution.

Detailed methods of measuring the D10, D50, and D90 are as described above.

In one embodiment, the span value may range from 1.1 to 1.55, or may also range from1.1 to 1.5. When the span value of the negative electrode active material is within this range, the negative electrode active material includes substantially no fine particles. That is, because the negative electrode active material includes almost no irregularly-shaped fine particles that have a size of 1 μm or less, the negative electrode active material may exhibit a low specific surface area, thereby reducing the side reactions with the electrolyte and improving the lifespan.

In one embodiment, the negative electrode active material may have a low specific surface area. The specific surface area may range from 0.5 $m^2/g$ to 2 $m^2/g$, 0.8 $m^2/g$ to 2 $m^2/g$, or 0.8 $m^2/g$ to 1.5 $m^2/g$. The specific surface area is lower than that of a conventional silicon-carbon composite negative electrode active material that has a specific surface area of approximately 3 $m^2/g$.

The silicon nanoparticles may have a particle diameter of 10 nm to 1,000 nm, and according to another embodiment, may have a particle diameter of 10 nm to 200 nm or 20 nm to 150 nm. When the particle diameter of the silicon nanoparticles is within these range, excessive volume expansion occurring during charging and discharging may be suppressed, and disconnection of the conductive path due to particle fragmentation during charging and

discharging may be prevented.

The silicon nanoparticles may be assembled to form silicon secondary particles. According to one embodiment, the silicon secondary particles may have an average particle diameter D50 of 1 to 15 μm. For example, the average particle diameter D50 of the silicon secondary particles may range from 1 to 10 μm, for example, from 6 to 8 μm.

In the amorphous carbon coating layer, the amorphous carbon may be soft carbon or hard carbon, mesophase pitch carbide, calcined coke, or a combination thereof. The amorphous carbon coating layer may have a thickness of 1 nm to 2 μm, a thickness of 1 nm to 500 nm, a thickness of 10 nm to 300 nm, or a thickness of 20 nm to 200 nm. When the thickness of the amorphous carbon coating layer is within these ranges, silicon volume expansion during charging and discharging may be well suppressed.

In the negative electrode active material, the amount of the silicon nanoparticles may range from 55 to 64% by weight, or range from 58 to 62% by weight, based on a total of 100% by weight of the negative electrode active material. The amount of the amorphous carbon coating layer may range from 36 to 45% by weight or from 38 to 42% by weight, based on a total of 100% by weight of the negative electrode active material. Within these ranges, the capacity of the negative electrode plate may be improved and particle stability may be enhanced.

The negative electrode active material may further include a polymer layer disposed on the amorphous carbon coating layer.

The polymer layer may include a copolymer of polyvinyl alcohol and polyacrylic acid. The copolymer may be a crosslinked copolymer in which polyvinyl alcohol and polyacrylic acid are crosslinked. When the negative electrode active material further includes the polymer layer, volume expansion of the negative electrode active material during charging and discharging may be more effectively suppressed.

Because the polymer layer includes polyvinyl alcohol and polyacrylic acid, the polymer layer may prevent the electrolyte from penetrating into the negative electrode active material during charging and discharging, particularly, from penetrating into empty spaces of the negative electrode active material such as pores. Thus, the polymer layer may more effectively suppressing side reactions between the negative electrode active material and the electrolyte.

The polyvinyl alcohol and the polyacrylic acid may be environmentally friendly aqueous polymers.

In one embodiment, the polymer layer includes a copolymer of polyvinyl alcohol and polyacrylic acid, for example, a crosslinked polymer or a crosslinked copolymer in which the polyvinyl alcohol and the polyacrylic acid are crosslinked. That is, the polymer may be a crosslinked polymer of polyvinyl alcohol and polyacrylic acid. When the polyvinyl alcohol and polyacrylic acid are crosslinked and included as a crosslinked polymer in the polymer layer, the polymer layer may not dissolve in a solvent used in to make a negative electrode active material layer such as water.

In the negative electrode active material where both the silicon nanoparticles and the amorphous carbon coating layer are referred to as a silicon-carbon composite, the amount of the polymer layer may range from 0.01 parts by weight to 3 parts by weight, or range from 1.2 parts by weight to 2.1 parts by weight, based on 100 parts by weight of the silicon-carbon composite. When the amount of the polymer layer is within these ranges, the effect resulting from the formation of the polymer layer may be further enhanced.

In the polymer layer, the mixing ratio of the polyvinyl alcohol and the polyacrylic acid may be a weight ratio of 3:97 to 40:60, a weight ratio of 6:94 to 40:60, or a weight ratio of 6:94 to 20:80, based on a total of 100 parts by weight of the polyvinyl alcohol and the polyacrylic acid. When the mixing ratio of the polyvinyl alcohol and the polyacrylic acid falls within these ranges, that is, when the amount of the polyacrylic acid is higher than that of the polyvinyl alcohol, cycle lifespan characteristics may be further improved.

In one embodiment, it is also desirable to appropriately control the ratio of functional groups contained in the polyvinyl alcohol and the polyacrylic acid included in the polymer layer. The molar ratio of OH groups in the polyvinyl alcohol and COOH groups in the polyacrylic acid may be 5:95 to 50:50 and may be 10:90 to 30:70, based on a total of 100 moles of the OH groups and COOH groups. When the molar ratio of the functional groups satisfies these ranges, the effect resulting from the polymer layer formation may be further improved, and cycle lifespan characteristics may be further improved.

The negative electrode active material may be prepared by the following process.

Micrometer-sized silicon particles are ground to produce nano-sized silicon primary particles. The grinding process may be performed by a conventional process such as ball milling and the like. In the grinding process, a dispersant may be used. Stearic acid, boron nitride (BN), MgS, polyvinylpyrrolidone (PVP), or a combination thereof may be used as the dispersant. The amount of dispersant used is sufficient as long as it enables the milling process of the silicon particles. Therefore, there is limit with respect to the amount of dispersant.

The silicon primary particles may have a particle diameter of 1 nm to 1,000 nm, 10 nm to 200 nm, or 20 nm to 150 nm.

The resulting mixture is dried, for example, using a spray drying process. By a spray drying process, a dried product having particles with a more uniform particle diameter and spherical shape may be formed, and secondary particles may be formed from the primary particles. When the dried product has particles with a uniform particle diameter and spherical shape, the subsequently formed amorphous carbon layer may be formed more uniformly over the entire surfaces of the secondary particles.

The dry product is mixed with an amorphous carbon precursor. Petroleum coke, coal coke, petroleum pitch, coal pitch, green coke, or a combination thereof may be used as the amorphous carbon precursor

The resulting mixture is subjected to compression molding. The resulting product may be subjected to further compression molding. This compression molding process may reduce the pores within the negative electrode active material, thereby effectively suppressing side reactions.

The compression molding process may be performed at a level such that the spherical shapes of the resulting product are maintained, particularly the negative electrode active material serving as the final product. The compression molding process may be performed at a pressure of, for example, more than 0 MPa and 30 MPa or less, more than 0 MPa and 200 MPa or less, or 5 MPa to 20 MPa.

The compression molding process may be performed using cold isostatic pressing (CIP). When the compression molding is performed in the above-described pressure ranges, the pores may be appropriately reduced while maintaining a spherical shape without generation of fine particles.

Next, the resulting compression-molded product is carbonized. The carbonization process may be performed at 600°C to 1,000°C. The dispersant may be removed during this carbonization process. Also, the carbonization process may be performed in an $N_2$ atmosphere, a helium atmosphere, or a combination thereof. By this carbonization process, the amorphous carbon precursor is converted to amorphous carbon and an amorphous carbon coating layer is formed that surrounds the surface of the compression-molded product.

When the carbonization process is performed within the above-described temperature ranges, the problem of excessive growth of Si particles may be suppressed, and the formation of SiC may also be suppressed, and the electrical conductivity of amorphous carbon may be improved. Also, when some of the amorphous carbon is inserted into the pores formed between the primary particles and disposed on the surfaces of the primary particles, the amorphous carbon surround the surfaces of the primary particles. When the atmosphere of the carbonization process satisfies the above-described conditions, the amorphous carbon may be effectively formed while suppressing the oxidation of silicon and the formation of SiC, thereby reducing the resistance of the active material.

Instead of the process of mixing the dried product with the amorphous carbon precursor, a vapor-phase coating process using an amorphous carbon precursor gas may be performed on the dried product. In such a case, an amorphous carbon coating layer may be formed on the surface of the product without performing a separate carbonization process. Therefore, a compression process may be performed after the vapor-phase coating process. The conditions for the compression process are as described above.

When the negative electrode active material layer according to one embodiment further includes a polymer layer, a process of mixing the negative electrode active material (referred to as a silicon-carbon composite) and the polymer solution, drying the resulting mixture, and then heat-treating the mixture may be further performed.

The polymer solution may be prepared by mixing polyvinyl alcohol and polyacrylic acid in a solvent. The solvent may be water, ethanol, or a combination thereof.

The mixing ratio of the silicon-carbon composite and the polymer solution may be adjusted so that the above polymer amount and mixing ratio of the polyvinyl alcohol and the polyacrylic acid in the negative electrode active material are achieved.

With the heat treatment process, a condensation reaction occurs between the OH group of polyvinyl alcohol and the COOH group of polyacrylic acid. As a result, the polyvinyl alcohol and the polyacrylic acid may be crosslinked to form a crosslinked polymer.

The heat treatment process may be performed at 150 °C to 200 °C. When the heat treatment process is performed within this temperature range, the condensation reaction, i.e., a crosslinking reaction, may occur easily, thereby facilitating formation of the crosslinked polymer.

The heat-treated product is subjected to a classification process. This classification process may be performed using a sieve so that the span value of the negative electrode active material (defined by Equation 2 above) reaches 1.1 to 1.6. The classification process may be performed so as to obtain an active material having a particle diameter such that the span value obtained from the D10, D50, and D90 of the active material reaches 1.1 to 1.6.

In addition to the first negative electrode active material, the second negative electrode active material, and the third negative electrode active material described above, the negative electrode plate may also further include a negative electrode active material (a fourth negative electrode active material) different from the above-described first to third negative electrode active materials.

The fourth negative electrode active material may further include a material capable of reversible intercalation/deintercalation of lithium ions, lithium metal, an alloy of lithium and a metal, a material capable of doping and dedoping lithium, or a transition metal oxide.

The material capable of reversible intercalation/deintercalation of lithium ions may include a carbon-based negative electrode active material, for example, crystalline carbon, amorphous carbon, or a combination thereof. Examples of the crystalline carbon include graphite such as amorphous, plate-shaped, flaky, spherical or fibrous natural or artificial graphite. Examples of the amorphous carbon include soft carbon or hard carbon, mesophase pitch carbide,

calcined coke, and the like.

As the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or a Sn-based negative electrode active material may be used. The Si-based negative electrode active material may be silicon, a silicon-carbon composite, $SiO_x$ ($0 < x < 2$), a Si-Q alloy, or a combination thereof. In the formula Si-Q, where Q is selected from an alkali metal, an alkaline earth metal, a Group 13 element, a Group 14 element (excluding Si), a Group 15 element, a Group 16 element, a transition metal, a rare earth element, and a combination thereof. The Sn-based negative electrode active material may be Sn, $SnO_2$, a Sn-based alloy, or a combination thereof.

The silicon-carbon composite may be a composite of silicon and amorphous carbon. According to one embodiment, the silicon-carbon composite may be in the form of silicon particles whose surfaces are coated with amorphous carbon. For example, the composite may include secondary particles (core) assembled from primary particles, and an amorphous carbon coating layer (shell) disposed on the surfaces of the secondary particles. The amorphous carbon may be disposed between the primary particles of silicon so that the primary particles of silicon may be coated with amorphous carbon. The secondary particles may be dispersed in an amorphous carbon matrix.

The silicon-carbon composite may also further include crystalline carbon. For example, the silicon-carbon composite may include a core including crystalline carbon and silicon particles, and an amorphous carbon coating layer disposed on a surface of the core.

The Si-based negative electrode active material or the Sn-based negative electrode active material may be used in combination with the carbon-based negative electrode active material.

## Binder

The binder may include a (meth)acrylic based binder. The (meth)acrylic based binder may provide improved expansion characteristics.

According to one embodiment, the (meth)acrylic based binder may be included in an amount of 95% by weight or more, for example, 95 to 100% by weight, or 100% by weight, of the total binder in the electrode plate. Within these ranges, the effects of the above-described electrode plate may be easily achieved.

The (meth)acrylic based binder may boost charging performance and improve lifespan when the (meth)acrylic binder is applied to an electrode plate including the mixture of negative electrode active materials. Also, the (meth)acrylic based binder may provide a long lifespan due to its excellent surface protection function for the third negative electrode active material.

The (meth)acrylic based binder may be a copolymer of a monomer mixture including one or more (meth)acrylic monomers known to those skilled in the art. The (meth)acrylic monomer may include one or more of a (meth)acrylic monomer having a cyano group, a (meth)acrylic monomer having a carboxylic acid group, a (meth)acrylic monomer having a hydroxyl group, a (meth)acrylic monomer having an amide group, an aromatic vinyl-based monomer, and an unsaturated carboxylic acid alkyl ester monomer.

In one example, the (meth)acrylic based binder may include a unit derived from a (meth)acrylic monomer having a carboxylic acid group, for example, a unit derived from a (meth)acrylic acid-based monomer, and a unit derived from a (meth)acrylic monomer having a cyano group. The (meth)acrylic binder may boost charging performance and provide a long lifespan when the (meth)acrylic binder is applied to an electrode plate including the mixture of negative electrode active materials.

With respect to the (meth)acrylic based binder, the unit derived from the (meth)acrylic monomer having a carboxylic acid group may be included in an amount of 35 to 65 mol%. The unit derived from the (meth)acrylic monomer having a cyano group may be included in an amount of 35 to 65 mol%.

With respect to the (meth)acrylic based binder, when the amount of the unit derived from the (meth)acrylic monomer having a carboxylic acid group is less than 35 mol%, the (meth)acrylic binder may be insoluble in water, which is undesirable, may reduce the dispersibility of the negative electrode active material, and may deteriorate the storage stability of a negative electrode slurry. With respect to the (meth)acrylic based binder, when the amount of the unit derived from the (meth)acrylic monomer having a carboxylic acid group exceeds 65 mol%, cracks may occur in the electrode (negative electrode) during application and drying of the negative electrode slurry, making it difficult to manufacture the negative electrode.

With respect to the (meth)acrylic based binder, when the amount of the unit derived from the (meth)acrylic monomer having a cyano group is less than 35 mol%, the close adhesion of a negative electrode mixture layer to a substrate is reduced. With respect to the (meth)acrylic based binder, when the amount of the unit derived from the (meth) acrylic monomer having a cyano group exceeds 65 mol%, the (meth)acrylic binder may be water insoluable, which is undesirable, may reduce the dispersibility of the negative electrode active material, and may cause deteriorated storage stability of the negative electrode slurry.

The unit derived from the (meth)acrylic acid monomer may be represented by the following Chemical Formulas 1, 2, and 3, or a combination thereof:

[Chemical Formula 1]

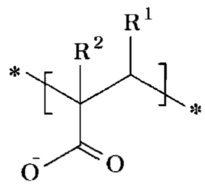

[Chemical Formula 2]

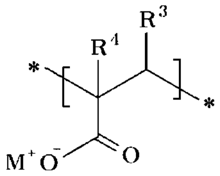

[Chemical Formula 3]

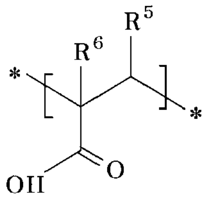

wherein:

$R^1$ to $R^6$ are each independently hydrogen or a methyl group, and in Chemical Formula 2 M is an alkali metal.

The alkali metal may be, for example, lithium, sodium, potassium, rubidium, or cesium.

The (meth)acrylic acid monomer is preferably at least one of (meth)acrylic acid, an alkali metal salt of (meth) acrylic acid, and an ammonium salt of (meth)acrylic acid. Here, the (meth)acrylic acid refers to acrylic acid or methacrylic acid. The alkali metal salt of (meth)acrylic acid includes sodium acrylate, lithium acrylate, potassium acrylate, calcium acrylate, magnesium acrylate, sodium methacrylate, lithium methacrylate, potassium methacrylate, calcium methacrylate, and the like, and sodium acrylate is preferred. The ammonium salt of (meth)acrylic acid includes an ammonia-neutralized product, a monoethanolamine-neutralized product, a diethanolamine-neutralized product, a hydroxylamine-neutralized product, and the like of (meth)acrylic acid, and an ammonia-neutralized product of acrylic acid is preferred.

The unit derived from the (meth)acrylic monomer having a cyano group may be, for example, represented by the following Chemical Formula 4:

[Chemical Formula 4]

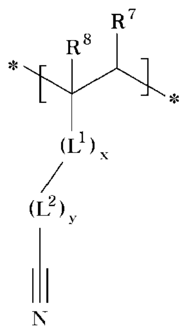

wherein:
$R^7$ and $R^8$ are each independently hydrogen or a C1 to C3 alkyl group, $L^1$ is-C(=O)-, -C(=O)O-, -OC(=O)-, -O- or -C(=O)NH-, X is an integer from 0 to 2, $L^2$ is a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and y is an integer from 0 to 2.

The cyano group-containing structural unit may be a structural unit derived from (meth)acrylonitrile, alkene nitrile, cyanoalkyl (meth)acrylate or 2-(vinyloxy)alkane nitrile. Here, the alkene may be a C1 to C20 alkene, a C1 to C10 alkene, or a C1 to C6 alkene, and the alkyl may be a C1 to C20 alkyl, a C1 to C10 alkyl, or a C1 to C6 alkyl. Also, the alkane may be a C1 to C20 alkane, a C1 to C10 alkane, or a C1 to C6 alkane.

The alkene nitrile may be, for example, allyl cyanide, 4-pentene nitrile, 3-pentene nitrile, 2-pentene nitrile, 5-hexene nitrile, or the like. The cyanoalkyl (meth)acrylate may be, for example, cyanomethyl (meth)acrylate, cyanoethyl (meth)acrylate, cyanopropyl (meth)acrylate, cyanooctyl (meth)acrylate, or the like. The 2-(vinyloxy)alkane nitrile may be, for example, 2-(vinyloxy)ethane nitrile or 2-(vinyloxy)propane nitrile.

The negative electrode plate includes a binder having a unit derived from the (meth)acrylic monomer having a carboxylic acid group and a unit derived from the (meth)acrylic monomer having a cyano group. Such a binder further improves the characteristics of a rechargeable battery.

In addition to the unit derived from the (meth)acrylic monomer having a carboxylic acid group, the unit derived from the (meth)acrylic acid monomer, and the unit derived from the (meth)acrylic monomer having a cyano group, the (meth)acrylic binder may further include a unit derived from another monomer copolymerizable with the monomer, i.e., a comonomer. The comonomer may include a hydroxyl group-containing monomer or an amide group-containing monomer. The hydroxyl group-containing monomer includes, for example, 2-hydroxyethyl (meth)acrylate, 2-hydroxypropyl (meth) acrylate, 4-hydroxybutyl (meth)acrylate, 2-hydroxyhexyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methylacrylate, N-methylol (meth)acrylamide, N-hydroxy (meth)acrylamide, vinyl alcohol, allyl alcohol, 2-hydroxyethyl vinyl ether, 4-hydroxybutyl vinyl ether, diethylene glycol monovinyl ether, and the like. The amide group-containing monomer includes, for example, acrylamide, methacrylamide, diethyl(meth)acrylamide, N-vinylpyrrolidone, N-vinyl-2-pyrrolidone, N-(meth)acryloylpyrrolidone, N,N-dimethylacrylamide, N,N-dimethylmethacrylamide, N,N-diethyl acrylamide, N,N-diethylmethacrylamide, N,N'-methylenebisacrylamide, N,N-dimethylaminopropylacrylamide, N,N-dimethylaminopropylmethacrylamide, and the like.

The unit derived from the comonomer may be included in the binder in an amount of greater than 0 mol% and 20 mol% or less. The binder may be a watersoluble copolymer for stabilizing the dispersion of the polymer. The binder, for example, the (meth)acrylic based binder, may be included in the negative electrode plate in an amount of 0.5 to 5 % by weight, for example, 1 to 3 % by weight. Within this range, the effects of the above-described negative electrode plate may be easily achieved.

According to one embodiment, the binder, for example, the (meth)acrylic based binder, may be included in an amount of 1 to 15 parts by weight based on 100 parts by weight of the mixture of negative electrode active materials. Within this range, the effects of the above-described negative electrode plate may be easily achieved.

The binder may further include a binder other than the (meth)acrylic based binder.

A non-aqueous binder, an aqueous binder, a dry binder, or a combination thereof may be used.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, a (meth)acrylic rubber, a butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the negative electrode binder, a cellulose-based compound capable of imparting viscosity may be further included. As such a cellulose-based compound, a mixture of one or more of carboxymethyl cellulose, hydroxypropylmethyl cellulose, methyl cellulose, or an alkali metal salt thereof may be used. Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof. That is, the negative electrode may be a dry negative electrode plate.

## Conductive material

The negative electrode plate for a rechargeable lithium battery may further include a conductive material. The

conductive material may be included in the negative electrode plate in an amount of greater than 0% by weight and 5% by weight or less.

The conductive material is used to impart conductivity to the electrode, and any material may be used as long as it is electronically conductive without and does not cause an undesirable chemical change in the battery to be configured. Examples of the conductive material include carbon-based materials such as natural graphite, artificial graphite, carbon black, acetylene black, Ketjen black, carbon fibers, carbon nanofibers, carbon nanotubes, and the like; metal-based materials in the form of metal powder or metal fibers containing copper, nickel, aluminum, silver, and the like; conductive polymers such as polyphenylene derivatives and the like; or a mixture thereof.

A negative electrode current collector may also be laminated on at least one surface of the negative electrode plate.

As the negative electrode current collector, any one of a copper foil, nickel foil, stainless steel foil, titanium foil, nickel foam, copper foam, a polymer substrate coated with a conductive metal, and a combination thereof may be used.

Another exemplary embodiment provides a rechargeable lithium battery including the negative electrode plate for a rechargeable lithium battery. The rechargeable lithium battery may include the negative electrode plate for a rechargeable lithium battery and a positive electrode. The negative electrode plate be as described above.

Positive electrode

A positive electrode for a rechargeable lithium battery may include a current collector and a positive electrode active material layer on the current collector. The positive electrode active material layer may include a positive electrode active material and may further include a binder and/or a conductive material. The positive electrode may further include an additive that can serve as a sacrificial positive electrode.

Positive electrode active material

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide include lithium nickel-based oxide, lithium cobalt-based oxide, lithium manganese-based oxide, lithium iron phosphate-based compound, cobalt-free nickel-manganese-based oxide, or a combination thereof. As examples, the following compounds represented by any one of the following chemical formulas may be used: $Li_aA_{1-b}X_bO_{2-c}D_c$ ($0.90 \le a \le 1.8$, $0 \le b \le 0.5$, and $0 \le c \le 0.05$); $Li_aMn_{2-b}X_bO_{4-c}D_c$ ($0.90 \le a \le 1.8$, $0 \le b \le 0.5$, and $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, and $0 < \alpha < 2$); $Li_aNi_{1-b-c}Mn_dX_cO_{2-\alpha}D_\alpha$ ($0.90 \le a \le 1.8$, $0 \le b \le 0.5$, $0 \le c \le 0.5$, and $0 < \alpha < 2$); $Li_aNi_bCo_cL^1_dG_eO_2$ ($0.90 \le a \le 1.8$, $0 \le b \le 0.9$, $0 \le c \le 0.5$, $0 \le d \le 0.5$, and $0 \le e \le 0.1$); $Li_aNiG_bO_2$ ($0.90 \le a \le 1.8$ and $0.001 \le b \le 0.1$); $Li_aCoG_bO_2$ ($0.90 \le a \le 1.8$ and $0.001 \le b \le 0.1$); $Li_aMn_{1-b}G_bO_2$ ($0.90 \le a \le 1.8$ and $0.001 \le b \le 0.1$); $Li_aMn_2G_bO_4$ ($0.90 \le a \le 1.8$ and $0.001 \le b \le 0.1$); $Li_aMn_{1-g}G_gPO_4$ ($0.90 \le a \le 1.8$ and $0 \le g \le 0.5$); $Li_{(3-f)}Fe_2(PO_4)_3$ ($0 \le f \le 2$); or $Li_aFePO_4$($0.90 \le a \le 1.8$). In these chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

The positive electrode active material may be, for example, a high nickel-based positive electrode active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles to each other and also to attach the positive electrode active material to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like. But the present disclosure is not limited to these examples.

The conductive material may be used to impart conductivity (e.g., electrical conductivity) to the electrode. Any material that does not cause an undesirable chemical change in a rechargeable lithium battery and conducts electrons can

be used in the battery. Examples of the conductive material include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Aluminum may be used as the current collector. But the present disclosure is not limited to aluminum.

Electrolyte Solution

The rechargeable lithium battery may further include an electrolyte solution. The electrolyte solution may include a non-aqueous organic solvent and a lithium salt.

The non-aqueous organic solvent may serve as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used. The cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOBP), and lithium bis(oxalato) borate (LiBOB).

Separator

The lithium rechargeable battery may further include a separator. Depending on the type of the rechargeable lithium battery, the separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of a polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON®, and polytetrafluoroethylene, or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof. But the present disclosure is not limited to these example.

The organic material and the inorganic material may be mixed in one coating layer. In other embodiments, a coating layer including an organic material and a coating layer including an inorganic material may be stacked.

The rechargeable lithium battery

The rechargeable lithium battery may be cylindrical, prismatic, pouch, or coin-type batteries, and the like

depending on their shape.

FIGS. 5 to 8 are schematic views illustrating rechargeable lithium batteries according to an embodiments. FIG. 5 shows a cylindrical battery, FIG. 6 shows a prismatic battery, and FIGS. 7 and 8 show pouch-type batteries. Referring to FIGS. 5 to 8, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 5. In FIG. 6, the rechargeable lithium battery 100 may include a positive lead tab 14, a positive terminal 12, a negative lead tab 21, and a negative terminal 22. As shown in FIGS. 7 and 8, the rechargeable lithium battery 100 may include an electrode tab 70, which may be, for example, a positive electrode tab 71 and a negative electrode tab 72 forming an electrical path for inducing the current formed in the electrode assembly 40 to outside of the battery.

The rechargeable lithium battery according to an embodiment may be used in automobiles, mobile phones, and/or various types of electric devices, as non-limiting examples.

An electronic device or an electric vehicle may contain the rechargeable lithium battery.

Hereinafter, examples and comparative examples of the present disclosure will be described. However, it should be understood that the following examples are only examples, and the present disclosure is not limited to these examples.

**Example 1**

(1) Preparation of first negative electrode active material

Using an air jet milling method, a flaky natural graphite raw material having an average particle diameter D50 of 120 μm was ground into primary particles having a plate-like shape and a major axis length of 20 to 30 μm. The primary particles were assembled into spherical secondary particles having an average particle diameter D50 of 7 μm using a spheroidizing device. Pitch carbon was added to the secondary particles, mixed, and then the mixture was heat-treated at 3,000°C in a sintering furnace for 2 hours to prepare a negative electrode active material. The pitch carbon was added so that the natural graphite to amorphous carbon weight ratio in the negative electrode active material was 90:10.

(2) Second negative electrode active material

Artificial graphite (spherical, average particle diameter D50: 15 μm, pellet density: 1.5 g/cc, tap density: 0.9 g/cc, BET specific surface area: 1.5 $m^2/g$, and orientation degree: 100) was used as the second negative electrode active material. The artificial graphite was in the form of secondary particles formed from primary particles.

(3) Third negative electrode active material

Silicon nanoparticles (aspect ratio: 5, and average particle size: approximately 100 nm) and petroleum pitch (amorphous carbon) were mixed in an isopropyl alcohol solvent at a weight ratio of 70:30, and the mixture was dispersed using a homogenizer to prepare a dispersion. The prepared dispersion was sprayed at 120 °C using a spray dryer. The resulting spray-dried product (precursor) was pressurized to 50 MPa using a powder pressure and then heat-treated at 1,000 °C in a furnace under a $N_2$ atmosphere to produce a reaction product that includes a core including amorphous carbon and silicon nanoparticles and a coating layer formed on a surface of the core, with the coating layer including amorphous carbon. The resulting reaction product was ground and classified using a 325 mesh to prepare a third negative electrode active material (C-1).

The prepared third negative electrode active material had pores having a a size of 200 nm or less and a volume of $2.95 \times 10^{-2}$ $cm^3/g$, an interparticle distance between silicon nanoparticles was 65 nm, an average particle diameter D50 was 8.3 μm, and a pore size was 200 nm or less.

The interparticle distance between the silicon nanoparticles was measured by analyzing the cross-section of silicon nanoparticles using TEM and calculating the distances between the centers of the silicon nanoparticles.

The pore volume was measured by putting the silicon nanoparticles into a pore measurement device (ASAP series made by Micromeritics Instrument Corp), heating the silicon nanoparticles to 623 K at 10 K/min, pretreating the silicon nanoparticles for 2 to 10 hours (vacuum pressure: 100 mmHg or less), and then measuring the pore volume in liquid nitrogen with a relative pressure ($P/P_o$) controlled to 0.01 or less. Specifically, nitrogen adsorption was measured at 32 points from a relative pressure of 0.01 to 0.995 and then nitrogen desorption was measured at 24 points up to a relative pressure of 0.14. BET calculations can generally be made up to a point at which the relative pressure ($P/P_o$) is 0.1.

(4) 47 parts by weight of the first negative electrode active material, 47 parts by weight of the second negative electrode active material, and 6 parts by weight of the third negative electrode active material were mixed based on 100 parts by weight of the mixture of negative electrode active materials to prepare a mixture of negative electrode active

materials.

97.5% by weight of the prepared mixture of negative electrode active materials and 2.5% by weight of a (meth) acrylic binder (copolymer of acrylic acid and acrylonitrile) and a styrene butadiene rubber (SBR) (1.5% by weight and 1% by weight, respectively) serving as a binder were mixed in distilled water to prepare a negative electrode active material slurry.

The negative electrode active material slurry was applied to a copper current collector, dried, and then rolled to make a negative electrode plate.

A half-cell battery was made using the negative electrode plate, a lithium metal counter electrode, and an electrolyte. The electrolyte was a mixed solvent (3:7 volume ratio) of ethylene carbonate and dimethyl carbonate in which 1 M $LiPF_6$ is dissolved.

**Example 2**

A first negative electrode active material was prepared in the same manner as in Example 1, except that the spheroidization conditions in Example 1 were changed. A negative electrode and a half-cell battery were made in the same manner as in Example 1 using the prepared first negative electrode active material.

**Example 3**

A first negative electrode active material was prepared in the same manner as in Example 1, except that the spheroidization conditions in Example 1 were changed. A negative electrode and a half-cell battery were made in the same manner as in Example 1 using the prepared first negative electrode active material.

**Examples 4 to 6**

Negative electrode plates and half-cell batteries were made in the same manner as in Example 1, except that the weight ratio of each of the components in Example 1 was changed as shown in Table 1 below.

**Comparative Example 1**

A first negative electrode active material was prepared in the same manner as in Example 1, except that pitch carbon was not added when the first negative electrode active material was prepared in Example 1. A negative electrode and a half-cell battery were made in the same manner as in Example 1 using the prepared first negative electrode active material.

**Comparative Example 2**

A flaky natural graphite raw material having an average particle diameter D50 of 120 μm or more was ground into fine primary particles having an average particle diameter D50 of 120 μm using an air jet milling method. The primary particles were assembled into secondary particles having an average particle diameter of 20 μm using a spheroidizing device. Pitch carbon was added to the secondary particles, mixed, and then heat-treated at 1,200 °C in a sintering furnace for 2 hours to prepare a first negative electrode active material. The pitch carbon was added so that the natural graphite to amorphous carbon weight ratio in the negative electrode active material was 90:10.

A negative electrode and a half-cell battery were made in the same manner as in Example 1 using the prepared first negative electrode active material.

**Comparative Example 3**

A flaky natural graphite raw material having an average particle diameter D50 of 80 μm was ground into primary particles having a major axis length of 7 μm using an air jet milling method. The primary particles were assembled into spherical secondary particles having an average particle diameter D50 of 15.6 μm using a spheroidizing device. Pitch carbon was added to the secondary particles, mixed, and then heat-treated at 1,200 °C in a sintering furnace for 2 hours to prepare a negative electrode active material. The pitch carbon was added so that the natural graphite to amorphous carbon weight ratio in the negative electrode active material was 90:10.

A negative electrode and a half-cell battery were made in the same manner as in Example 1 using the prepared first negative electrode active material.

**Comparative Example 4**

A negative electrode plate and a half-cell battery were made in the same manner as in Example 1, except that carboxymethyl cellulose (CMC) was used instead of the (meth)acrylic binder in Example 1.

**Comparative Example 5**

A negative electrode plate and a half-cell battery were made in the same manner as in Example 1, except that carboxymethyl cellulose was used instead of the (meth)acrylic binder in Example 1 and the weight ratio of each of the components was changed, as shown in Table 1 below.

**Experimental Example 1: Evaluation of first negative electrode active material**

Pellet density (g/cc)

The pellet density was measured using Carver 4350.L (CARVER Inc.) as a pellet density meter. The pellet density is measured by putting 1.0 g of the first negative electrode active material of each of the examples and comparative examples into a mold and maintaining the first negative electrode active material at a pressure of 2.0 tons for 30 seconds.

Orientation degree:

The orientation degree was measured using X'Pert Pro (PANalytical, Co.) as an X-ray diffraction (XRD) analysis device. For the first negative electrode active materials of the examples and comparative examples, the ratio of the diffraction peak intensity I(002) of the (002) plane to the diffraction peak intensity I(110) of the (110) plane measured by an XRD analysis method using Cu$\alpha$ rays was calculated.

d002 (Å)

The d002 was measured using X'Pert Pro (PANalytical, Co.) as an XRD analysis device. For the first negative electrode active materials of the examples and comparative examples, the interplanar spacing of the (002) plane was measured by an XRD analysis method using Cu$\alpha$ rays.

Mercury cumulative pore volume (mL/g)

For the first negative electrode active materials of the examples and comparative examples, the mercury cumulative pore volume was measured using an Hg Intrusion porosimeter (Micromeritics, AutoPore V, mercury intrusion porosimetry). The negative electrode active material was placed in a special sample cup so that mercury surrounded the negative electrode active material, and a pressure ranging from 0.2 to 60,000 psi was applied to force mercury into the negative electrode active material. Thereafter, the mercury porosity was measured by measuring a change in volume of the mercury reduced in a capillary stem reservoir. The pore size that can be measured in this way ranges from 0.01 $\mu$m to 100 $\mu$m. In the negative electrode active material, pores having a size of 0.01 $\mu$m to 5 $\mu$m were determined as pores in the active material.

Sphericity:

The sphericity was measured using Morphologi 4 (Malvern Ltd.) as a sphericity analyzer. For the first negative electrode active materials of the examples and comparative examples, the values A and B in Equation 1 above were calculated, and the sphericity was then calculated according to Equation 1.

**Experimental Example 2: Evaluation of battery characteristics**

The half-cell batteries were charged and discharged at 0.1C to measure the charge and discharge capacities. The measured discharge capacities are shown in Table 1 below. Also, the Coulombic efficiency (discharge capacity/-charge capacity ratio x 100%) was measured.

The half-cells were subjected to one cycle of 0.2 C constant current (CC)/constant voltage (CV) charging and 0.2 C discharge, one cycle of 0.5 C CC charging and 0.2 C discharge, one cycle of 1 C CC charging and 0.2 C discharge, and one cycle of 2 C CC charging and 0.2 C discharge, and then charging characteristics were calculated. The charging conditions were a 10 mV cutoff for the CC phase and a 15-hour cutoff for the CV phase, and the discharge conditions were a 1.5 V cutoff. The charging characteristics were measured at each C-rate. The charging characteristic results were expressed by calculating the ratio of the 2 C CC charge capacity to the 0.2C CC charge capacity.

Energy density (Wh/L):

$$(\text{Cell capacity (Ah) x Cell average voltage (V)})/\text{Cell volume (L)}$$

The energy density is a value obtained by dividing the product of the discharge capacity calculated by discharging at a C-rate of 0.1 C to 1 C in the operating voltage range of a battery cell and the average voltage of the corresponding cell by the volume of the cell.

Boost charging time (seconds):

The boost charging time refers to the time taken to charge from 8 to 80 % SOC (state of charge) through constant current charging. The boost charging time was evaluated by identifying a charging pattern that does not reach the upper voltage limit of 4.2 V during charging.

Boost charging life (cycle):

Once the boost charging time was determined, a large cell was evaluated for one cycle, with charging from 8 to 80 % SOC and discharging at a discharge voltage of 2.8 V and a constant current of 0.33 C, until the SOH (state of health) reached 80%.

Expansion rate (%)

The expansion rate was measured using a thickness monitoring system (TMS) method.
The thicknesses of the cells made according to the examples and comparative examples were evaluated in real time while charging/discharging (0.5 C/0.5 C) at 45 °C under the conditions of a charge voltage of 4.35 V and a discharge voltage of 2.8 V so as to evaluate the increase in thickness after 50 cycles compared to the thickness after 1 cycle. The expansion rate was then calculated as:

Expansion rate = (Cell thickness after 50 cycles - Cell thickness after 1 cycle)/Cell thickness after 1 cycle * 100

[Table 1]

| | | Examples | | | | | | Comparative Example | | | | |
|---|---|---|---|---|---|---|---|---|---|---|---|---|
| | | 1 | 2 | 3 | 4 | 5 | 6 | 1 | 2 | 3 | 4 | 5 |
| First negative electrode active material | major axis length of Primary particles | 30 | 30 | 30 | 30 | 30 | 30 | 30 | 120 | 7 | 30 | 30 |
| | Secondary particles D50 | 7 | 10 | 5 | 7 | 7 | 7 | 7 | 20 | 15.6 | 7 | 7 |
| | Pellet density | 1.75 | 1.80 | 1.60 | 1.75 | 1.75 | 1.75 | 1.9 | 1.8 | 1.78 | 1.75 | 1.75 |
| | Orientation degree | 60 | 80 | 55 | 60 | 60 | 60 | 70 | 110 | 120 | 60 | 60 |
| | d002 | 3.3569 | 3.3567 | 3.3573 | 3.3569 | 3.3569 | 3.35 69 | 3.3558 | 3.3569 | 3.3561 | 3.3569 | 3.356 9 |
| | Sphericity | 0.95 | 0.95 | 0.90 | 0.95 | 0.95 | 0.95 | 0.95 | 0.95 | 0.95 | 0.95 | 0.95 |
| | Mercury cumulative pore volume | 0.035 | 0.041 | 0.037 | 0.035 | 0.035 | 0.03 5 | 0.158 | 0.065 | 0.066 | 0.035 | 0.035 |
| Third negative electrode active material | | C-1 | C-1 | C-1 | C-1 | C-1 | C-1 | C-1 | C-1 | C-1 | C-1 | C-1 |
| Binder | | D-1+ D-3 | D-1+ D-3 | D-1+ D-3 | D-1+ D-3 | D-1+ D-3 | D-1+ D-3 | D-1+ D-3 | D-1+ D-3 | D-1+ D-3 | D-2+ D-3 | D-2 + D-3 |
| Binder content | | 2.5 | 2.5 | 2.5 | 2.5 | 1 | 3 | 2.5 | 2.5 | 2.5 | 2.5 | 2.5 |
| Weight ratio | | 47:47:6 | 47:47:6 | 47:47:6 | 45:45:1 0 | 47:47:6 | 47:4 7:6 | 47:47:6 | 47:47:6 | 47:47:6 | 47:47:6 | 45:45 : 10 |
| Energy density (Wh/L) | | 750 | 750 | 735 | 770 | 750 | 750 | 750 | 750 | 730 | 750 | 760 |
| Boost charging time (seconds) | | 900 | 960 | 780 | 840 | 870 | 930 | 1,200 | 1,800 | 1,080 | 960 | 960 |
| Boost charging life (cycles) | | 1,600 | 1,300 | 1,600 | 1,500 | 1,350 | 1,65 0 | 1,400 | 1,100 | 600 | 900 | 600 |
| Expansion rate (%) | | 5 | 3 | 7 | 9 | 8 | 3 | 15 | 9 | 10 | 18 | 31 |

In Table 1:

C-1: Silicon-carbon composite
D-1: (Meth)acrylic based binder
D-2: CMC
D-3: SBR
Weight ratio: weight ratio of first negative electrode active material to second negative electrode active material to third negative electrode active material based on 100 parts by weight of negative electrode active material

As shown in Table 1 above, the negative electrode plates for a rechargeable lithium battery of the examples achieved high energy density while simultaneously provided boost charging and long lifespan characteristics. In addition, the lifespan was maximized using an acrylic binder to overcome the drawback of a high expansion rate which is inherent in the third negative electrode active material.

On the other hand, Comparative Example 1, which did not include the first negative electrode active material of the present disclosure, was poor in terms of boost charging and electrode plate expansion because it had a high expansion rate and a long boost charging time. Comparative Examples 2 and 3, which did not include the first negative electrode active material of the present disclosure, had a poor boost charging effect because they were not poor in terms of boost charging time and boost charging life. Comparative Examples 4 and 5, which did not include the binder of the present disclosure, were poor in terms of electrode plate expansion and boost charging life.

**Example 7**

(1) Preparation of first negative electrode active material

A flaky natural graphite raw material having an average particle diameter D50 of 120 μm was ground into primary particles having a plate-like shape and a major axis length of 20 to 30 μm using an air jet milling method. The primary particles were assembled into spherical secondary particles having an average particle diameter D50 of 7 μm using a spheroidizing device. Pitch carbon was added to the secondary particles, mixed, and then heat-treated at 3,000°C in a sintering furnace for 2 hours to prepare a negative electrode active material. The pitch carbon was added so that the natural graphite to amorphous carbon weight ratio in the negative electrode active material was 90:10.

(2) Second negative electrode active material

Artificial graphite (spherical, average particle diameter D50: 15 μm, pellet density: 1.5 g/cc, tap density: 0.9 g/cc, BET specific surface area: 1.5 $m^2/g$, and orientation degree: 100) was used as the second negative electrode active material. The artificial graphite was in the form of secondary particles each made of primary particles.

(3) Preparation of third negative electrode active material

Artificial graphite having an average particle diameter D50 of 3 to 5 μm and an aspect ratio of 4 to 10; silicon nanoparticles having an average particle diameter D50 of 100 nm; and petroleum pitch amorphous carbon were mixed in a weight ratio of 40:40:20, and dispersed in an isopropyl solvent, followed by dispersion using a homogenizer to prepare a dispersion. The dispersion was spray-dried at 120 °C using a spray dryer. The resulting spray-dried product was heat-treated at 1,000 °C in a furnace under a nitrogen atmosphere to form a silicon-carbon composite core of artificial graphite and silicon particles, and an amorphous carbon layer formed on a surface of the core. The resulting product was ground and classified using a 400 mesh sieve to prepare a third negative electrode active material (C-1) having a silicon-carbon composite core of artificial graphite and silicon particles, and an amorphous carbon coating layer formed on a surface of the core.

The third negative electrode active material included a composite core of silicon and artificial graphite, and an amorphous carbon shell formed on a surface of the core. The weight ratio of the silicon particles and the artificial graphite in the third negative electrode active material was 5:5, and the amorphous carbon coating layer has a thickness of 30 nm, and the third negative electrode active material has a aspect ratio of 1 to 2.5. The silicon particles, artificial graphite, and the amorphous carbon included in the third negative electrode active material were 40% by weight, 40% by weight, and 20% by weight, respectively.

(4) 47 parts by weight of the first negative electrode active material, 47 parts by weight of the second negative electrode active material, and 6 parts by weight of the third negative electrode active material were mixed based on 100 parts by weight of the mixture of negative electrode active materials to prepare a mixture of negative electrode active materials.

97.5% by weight of the prepared mixture of negative electrode active materials and 2.5% by weight of mixture of a (meth)acrylic binder (copolymer of acrylic acid and acrylonitrile) and a styrene butadiene rubber (SBR) (1:1 weight ratio) serving as a binder were mixed in distilled water to prepare a negative electrode active material slurry.

The negative electrode active material slurry was applied to a copper current collector, dried, and then rolled to manufacture a negative electrode plate.

A half-cell battery was made using the negative electrode plate, a lithium metal counter electrode, and an electrolyte. The electrolyte was a mixed solvent (3:7 volume ratio) of ethylene carbonate and dimethyl carbonate in which 1 M $LiPF_6$ is dissolved.

**Example 8**

A first negative electrode active material was prepared in the same manner as in Example 7, except that the spheroidization conditions in Example 7 were changed. A negative electrode and a half-cell battery were made in the same manner as in Example 7 using the prepared first negative electrode active material.

**Example 9**

A first negative electrode active material was prepared in the same manner as in Example 7, except that the spheroidization conditions in Example 7 were changed. A negative electrode and a half-cell battery were made in the same manner as in Example 7 using the prepared first negative electrode active material.

**Examples 10 to 13**

Negative electrode plates and half-cell batteries were made in the same manner as in Example 7, except that the weight ratio of each of the components in Example 7 was changed as shown in Table 2 below.

**Example 14**

As in Example 1, 97.5% by weight of the prepared mixture of negative electrode active materials and 2.5% by weight of a mixture of a (meth)acrylic binder, carboxymethyl cellulose (CMC), and a styrene butadiene rubber (SBR) (1:1:1 weight ratio) serving as a binder were mixed in distilled water to prepare a negative electrode active material slurry.

**Comparative Example 6**

A first negative electrode active material was prepared in the same manner as in Example 7, except that pitch carbon was not added when the first negative electrode active material was prepared in Example 7. A negative electrode and a half-cell battery were made in the same manner as in Example 7 using the prepared first negative electrode active material.

**Comparative Example 7**

A flaky natural graphite raw material having an average particle diameter D50 of 120 μm or more was ground into fine primary particles having an average particle diameter D50 of 120 μm using an air jet milling method. The primary particles were assembled into secondary particles having an average particle diameter of 20 μm using a spheroidizing device. Pitch carbon was added to the secondary particles, mixed, and then heat-treated at 1,200°C in a sintering furnace for 2 hours to prepare a negative electrode active material. The pitch carbon was added so that the natural graphite to amorphous carbon weight ratio in the negative electrode active material was 90:10.

A negative electrode and a half-cell battery were made in the same manner as in Example 7 using the prepared first negative electrode active material.

**Comparative Example 8**

A flaky natural graphite raw material having an average particle diameter D50 of 80 μm was ground into primary particles having a major axis length of 7 μm using an air jet milling method. The primary particles were assembled into spherical secondary particles having an average particle diameter D50 of 15.6 μm using a spheroidizing device. Pitch carbon was added to the secondary particles, mixed, and then heat-treated at 1,200°C in a sintering furnace for 2 hours to make a first negative electrode active material. The pitch carbon was added so that the natural graphite to amorphous carbon weight ratio in the negative electrode active material was 90:10.

A negative electrode and a half-cell battery were made in the same manner as in Example 7 using the prepared first negative electrode active material.

**Comparative Example 9**

A negative electrode plate and a half-cell battery were made in the same manner as in Example 7, except that carboxymethyl cellulose was used instead of the (meth)acrylic binder in Example 7.

**Experimental Example 3: Evaluation of first negative electrode active material**

The pellet density (g/cc), the orientation degree: d002 (Å); the sphericity; and the mercury cumulative pore volume (mL/g) were evaluated in the same manner as in Experimental Example 1.

**Experimental Example 4: Evaluation of battery characteristics**

Capacity (mAh/g) and charge C-rate (%)

The half-cell battery was charged and discharged at 0.1 C, and the discharge capacity was measured. The measured discharge capacity is shown in Table 1, and the charge-discharge efficiency (discharge capacity/charge capacity %) was also measured.

The half-cell battery was subjected to a 0.2 C constant current (CC) and constant voltage (CV) charge and one 0.2 C discharge, a 0.5 C constant current (CC) charge and one 0.2 C discharge, a 1 C constant current (CC) charge and one 0.2 C discharge, and a 2 C constant current (CC) charge and one 0.2 C discharge. The charging characteristics were calculated using the following conditions: a 10mV cutoff for the CC (constant current) section and a 15-hour cutoff for the CV (constant voltage) section. The discharge conditions were a 1.5V cutoff. The charging characteristics were measured at each C-rate. The charging characteristic results were calculated and expressed as the ratio of 2 C CC charging capacity to 0.2C CC charging capacity.

Direct current internal resistance (DC-IR, units: Ω)

A half-cell battery made according to the Examples and Comparative Examples was charged at 25 °C with a constant current/constant voltage of 0.2 C, 10 mV, and 0.01 C cut-off conditions, rested for 10 minutes, and then discharged at a constant current of 0.2 C, 1.5 V cut-off conditions, and rested for 10 minutes. One charge/discharge cycle was performed under the charge/discharge conditions. The voltage drop (voltage drop, V) that occurred with a current of 3C for 1 second at SOC50 (a state in which the battery is charged to 50% of its total charge capacity when the total charge capacity is 100%) was measured. The resistance value was obtained from the measured voltage and the applied current (3C), and the result was expressed as direct current internal resistance (DC-IR).

Energy density (Wh/L):

The energy density is a value obtained by dividing the product of the discharge capacity calculated by discharging at a C-rate of 0.1C to 1C in the operating voltage range of a battery cell and the average voltage of the corresponding cell by the volume of the cell. The energy density may be calculated from the formula: (Cell capacity (Ah) x Cell average voltage (V))/Cell volume (L)

Boost charging time (seconds):

The boost charging time refers to the time taken to charge from 8 to 80 % SOC through constant current charging, and the boost charging time was evaluated by identifying a charging pattern that does not reach the upper voltage limit of 4.2 V during charging.

Boost charging life (cycle):

Once the boost charging time was determined, a large cell was evaluated for one cycle, with charging from 8 to 80 % SOC (state of charge) and discharging at a discharge voltage of 2.8 V and a constant current of 0.33 C, until the SOH (state of health) reached 80 %.

Expansion rate (%)

The expansion rate was measured using a thickness monitoring system (TMS) method.

The thicknesses of the cells made according to the examples and comparative examples were evaluated in real time while charging/discharging (0.5 C/0.5 C) at 45 °C under the conditions of a charge voltage of 4.35 V and a discharge voltage of 2.8 V so as to evaluate the increase in thickness after 50 cycles compared to the thickness after 1 cycle.

The expansion rate was calculated as: Expansion rate = (Cell thickness after 50 cycles - Cell thickness after 1 cycle)/Cell thickness after 1 cycle * 100

[Table 2-1]

| | | Examples | | | | | | | |
|---|---|---|---|---|---|---|---|---|---|
| | | 7 | 8 | 9 | 10 | 11 | 12 | 13 | 14 |
| First negative electrode active material | Major axis length of primary particles | 30 | 30 | 30 | 30 | 30 | 30 | 30 | 30 |
| | D50 of secondary particles | 7 | 10 | 5 | 7 | 7 | 7 | 7 | 7 |
| | Pellet density | 1.75 | 1.80 | 1.60 | 1.75 | 1.75 | 1.75 | 1.75 | 1.75 |
| | Orientation degree | 60 | 80 | 55 | 60 | 60 | 60 | 60 | 60 |
| | d002 | 3.3569 | 3.3567 | 3.3573 | 3.3569 | 3.3569 | 3.3569 | 3.3569 | 3.3569 |
| | Sphericity | 0.95 | 0.95 | 0.90 | 0.95 | 0.95 | 0.95 | 0.95 | 0.95 |
| | Mercury cumulative pore volume | 0.035 | 0.041 | 0.037 | 0.035 | 0.035 | 0.035 | 0.035 | 0.035 |
| Third negative electrode active material | | C-1 | C-1 | C-1 | C-1 | C-1 | C-1 | C-1 | C-1 |
| Binder | | D-1 + D-3 | D-1 + D-3 | D-1 + D-3 | D-1 + D-3 | D-1 + D-3 | D-1 + D-3 | D-1 + D-3 | **D-1 + D-**2+D-3 |
| Binder content | | 2.5 | 2.5 | 2.5 | 2.5 | 2.5 | 1 | 3 | 2.5 |
| Weight ratio | | 47:47:6 | 47:47:6 | 47:47:6 | 46:46:8 | 45:45:10 | 47:47:6 | 47:47:6 | 47:47:6 |
| Capacity | | 418 | 420 | 415 | 440 | 459 | 419 | 417 | 418 |
| C-rate characteristics | | 50 | 45 | 51 | 50 | 51 | 49 | 51 | 48 |
| DCIR | | 3.5 | 3.8 | 3.4 | 3.5 | 3.5 | 3.6 | 3.4 | 3.8 |
| Energy density | | 750 | 750 | 736 | 760 | 765 | 750 | 750 | 750 |
| Boost charging time | | 900 | 1,080 | 840 | 900 | 840 | 960 | 840 | 1,080 |
| Boost charging life | | 1,500 | 1,300 | 1,500 | 1,350 | 1,100 | 1,400 | 1,550 | 1,400 |
| Expansion rate | | 6 | 5 | 8 | 9 | 12 | 10 | 4 | 7 |

[Table 2-2]

| | | Comparative Example | | | |
|---|---|---|---|---|---|
| | | 6 | 7 | 8 | 9 |
| First negative electrode active material | Major axis length of primary particles | 30 | 120 | 7 | 30 |
| | D50 of secondary particles | 7 | 20 | 15.6 | 7 |
| | Pellet density | 1.9 | 1.8 | 1.78 | 1.75 |
| | Orientation degree | 70 | 110 | 120 | 60 |
| | d002 | 3.355 8 | 3.356 9 | 3.356 1 | 3.356 9 |
| | Sphericity | 0.95 | 0.95 | 0.95 | 0.95 |
| | Mercury cumulative pore volume | 0.158 | 0.065 | 0.066 | 0.035 |
| Third negative electrode active material | | C-1 | C-1 | C-1 | C-1 |
| Binder | | D-1 + D-3 | D-1 + D-3 | D-1 + D-3 | D-2 + D-3 |
| Binder content | | 2.5 | 2.5 | 2.5 | 2.5 |
| Weight ratio | | 47:47 :6 | 47:47 :6 | 47:47 :6 | 47:47 :6 |
| Capacity | | 421 | 416 | 410 | 405 |
| C-rate characteristics | | 42 | 40 | 44 | 45 |
| DCIR | | 4.0 | 4.4 | 4.1 | 4.0 |
| Energy density | | 750 | 748 | 730 | 745 |
| Boost charging time | | 1,320 | 1,680 | 1,380 | 1,200 |
| Boost charging life | | 1,000 | 800 | 900 | 1,200 |
| Expansion rate | | 13 | 8 | 9 | 14 |

In Table 2-1 and 2-2:

C-1: Silicon-carbon composite
D-1: (Meth)acrylic based binder
D-2: Carboxymethyl cellulose (CMC)
D-3: Styrene butadiene rubber (SBR)
Weight ratio: Weight ratio of first negative electrode active material to second negative electrode active material to third negative electrode active material based on 100 parts by weight of negative electrode active material

As shown in Table 2, the negative electrode plates for a rechargeable lithium battery of the examples exhibited high energy density, long lifespan, and boost charging characteristics when the negative electrode plates included an acrylic binder. Also, in terms of boost charging life, it can be seen that Example 7, which included a large amount (3%) of the acrylic binder has the longest lifespan, Comparative Example 8 had the highest orientation degree, and Comparative Example 9 had a poor lifespan when only the conventional CMC binder was added. Increasing the content of silicon may be advantageous in terms of capacity and energy density, but disadvantageous in terms of lifespan. When the acrylic binder was included, the expansion of the electrode plate may be suppressed, thereby reducing the lifespan reduction effect.

**Example 15**

(1) Preparation of first negative electrode active material

A flaky natural graphite raw material having an average particle diameter D50 of 120 μm were ground into primary particles having a plate-like shape and a major axis length of 30 μm using an air jet milling method. The primary particles were assembled into spherical secondary particles having an average particle diameter D50 of 7 μm using a spheroidizing device. Pitch carbon was added to the secondary particles, mixed, and then heat-treated at 3,000 °C in a sintering furnace for 2 hours to prepare a negative electrode active material. The pitch carbon was added so that the natural graphite to amorphous carbon weight ratio in the negative electrode active material was 90:10.

(2) Second negative electrode active material

Artificial graphite (spherical, average particle diameter D50: 15 μm, pellet density: 1.5 g/cc, tap density: 0.9 g/cc, BET specific surface area: 1.5 $m^2/g$, and orientation degree: 100) was used as the second negative electrode active material. The artificial graphite was in the form of secondary particles each formed by primary particles.

(3) Preparation of third negative electrode active material

Silicon particles having an average particle size of 8 μm were ball-milled to produce primary particles having an average particle size D50 of 100 nm. The primary particles were mixed with stearic acid in a weight ratio of 20:80, and the resulting mixture was spray-dried to produce secondary particles including pores and having an average particle size D50 of 7 μm.

The produced secondary particles and petroleum pitch were mixed in a weight ratio of 60:40, and the resulting mixture was subjected to a compression molding process using a cold isostatic pressing method at a pressure of 10 MPa. Subsequently, the resulting compression-molded product was carbonized at a temperature of 1,000 °C under $N_2$ atmosphere conditions.

The carbonized product was subjected to a classification process using a sieve so that the span value of Equation 2 above reached 1.1 so as to prepare a third negative electrode active material. The third negative electrode active material was a silicon-carbon composite having secondary particles having an average particle diameter D50 of 7 μm, which were assembled from silicon primary particles coated with 30 nm-thick soft carbon and having an average particle diameter D50 of 100 nm. And a soft carbon coating layer was coated on the secondary particles. The amount of the silicon nanoparticles was 60% by weight, and the amount of the soft carbon was 40% by weight based on the total weight of the third negative electrode active material. Also, the D10, D50, and D90 of the negative electrode active material were measured using a particle analyzer (trade name: LS 13 320, and manufacturer: Beckman Coulter), and the span value according to Equation 2 above was calculated.

Also, the sphericity was calculated from the cross-sectional image measured by CP-SEM using the Image J program. As a result, a sphericity of 0.98 was obtained. In addition, the total pore volume and mesopore volume of the prepared third negative electrode active material were measured using a Barrett-Joyner-Halenda (BJH) analysis device.

The BJH measurement was performed using a BJH (model name: ASAP 2020, and manufacturer: Micromeritics) analysis device by measuring an adsorption/desorption amount of the negative electrode active material adsorbed on the sample according to the pressure change while changing the pressure from 0 mHg to 950 mmHg using nitrogen gas at a temperature of liquid nitrogen (-198°C).

The prepared third negative electrode active material (C-1) had a sphericity of 0.98, a mesopore volume/total pore volume ratio of 68%, a specific surface area of 0.8 $m^2/g$, a BJH total pore volume of 0.007 $cm^3/g$, a D10 of 4.7 μm, a D50 of 8.2 μm, and a D90 of 13.7 μm, and a span value of 1.1 as calculated by Equation 2 above.

(4) A mixture of negative electrode active materials was prepared by mixing 47 parts by weight of the first negative electrode active material, 47 parts by weight of the second negative electrode active material, and 6 parts by weight of the third negative electrode active material based on 100 parts by weight of the mixture of negative electrode active materials.

97.5% by weight of the prepared mixture of negative electrode active materials and 2.5% by weight of a (meth) acrylic binder (copolymer of acrylic acid and acrylonitrile) (D-1) serving as a binder were mixed in distilled water to prepare a negative electrode active material slurry.

The negative electrode active material slurry was applied to a copper current collector, dried, and then rolled to make a negative electrode plate.

A half-cell battery was made using the negative electrode plate, a lithium metal counter electrode, and an electrolyte. The electrolyte was a mixed solvent (3:7 volume ratio) of ethylene carbonate and dimethyl carbonate in which 1 M $LiPF_4$ is dissolved.

**Example 16**

A first negative electrode active material was prepared in the same manner as in Example 15, except that the spheroidization conditions in Example 15 were changed. A negative electrode and a half-cell battery were made in the same manner as in Example 15 using the prepared first negative electrode active material.

**Example 17**

A first negative electrode active material was prepared in the same manner as in Example 15, except that the spheroidization conditions in Example 15 were changed. A negative electrode and a half-cell battery were made in the same manner as in Example 15 using the prepared first negative electrode active material.

### Examples 18 and 19

Negative electrode plates and half-cell batteries were made in the same manner as in Example 15, except that the weight ratio of each of the components in Example 15 was changed as shown in Table 3 below.

### Example 20

#### (1) Preparation of third negative electrode active material

A mixture of the secondary particles prepared in Example 1 and petroleum pitch was subjected to a compression molding process using a cold isostatic pressing method at a pressure of 30 MPa and then subjected to a classification process to achieve a span value of 1.5. As a result, a silicon-carbon composite having a span value of 1.5 and a sphericity of 0.92 was prepared.

6% by weight of polyvinyl alcohol and 94% by weight of polyacrylic acid were mixed in distilled water to prepare a polymer solution. The molar ratio of OH groups contained in the polyvinyl alcohol and COOH groups contained in the polyacrylic acid was 10:90.

The prepared silicon-carbon composite was mixed with the polymer solution, and the resulting mixture was stirred, and then dried. The mixing ratio of the silicon-carbon composite and the polymer solution was adjusted to 97.1% by weight of silicon-carbon composite and 2.9% by weight of the polymer. The dried mixture was heat-treated at 150 °C to prepare a third negative electrode active material (C-2).

In the prepared third negative electrode active material, the amount of the polymer was approximately 3 parts by weight based on 100 parts by weight of the silicon-carbon composite, the mixing ratio of polyvinyl alcohol and polyacrylic acid was a weight ratio of 6:94, and the molar ratio of OH groups contained in the polyvinyl alcohol and COOH groups contained in the polyacrylic acid was 10:90. In addition, the prepared third negative electrode active material (C-2) had a sphericity of 0.95, a mesopore volume/total pore volume ratio of 30%, a specific surface area of 1.2 $m^2/g$, a total pore volume of 0.015 $cm^3/g$, as determined by BJH, a D10 of 4.1 μm, a D50 of 7.9 μm, a D90 of 15.9 μm, and a span value of 1.5.

A negative electrode plate and a half-cell battery were made in the same manner as in Example 15, except that the prepared third negative electrode active material was used as the third negative electrode active material in Example 15.

### Comparative Example 10

A first negative electrode active material was prepared in the same manner as in Example 1, except that pitch carbon was not added when the first negative electrode active material was prepared in Example 15. A negative electrode and a half-cell battery were made in the same manner as in Example 15 using the prepared first negative electrode active material.

### Comparative Example 11

A flaky natural graphite raw material having an average particle diameter D50 of 120 μm or more was ground into fine primary particles having an average particle diameter D50 of 120 μm using an air jet milling method. The primary particles were assembled into secondary particles having an average particle diameter of 20 μm using a spheroidizing device. Pitch carbon was added to the secondary particles, mixed, and then heat-treated at 1,200 °C in a sintering furnace for 2 hours to prepare a first negative electrode active material. The pitch carbon was added so that the natural graphite to amorphous carbon weight ratio in the negative electrode active material was 90:10.

A negative electrode and a half-cell battery were made in the same manner as in Example 15 using the prepared first negative electrode active material.

### Comparative Example 12

A flaky natural graphite raw material having an average particle diameter D50 of 80 μm was ground into primary particles having a major axis length of 7 μm using an air jet milling method. The primary particles were assembled into spherical secondary particles having an average particle diameter D50 of 15.6 μm using a spheroidizing device. Pitch carbon was added to the secondary particles, mixed, and then heat-treated at 1,200 °C in a sintering furnace for 2 hours to prepare a first negative electrode active material. The pitch carbon was added so that the natural graphite to amorphous carbon weight ratio in the negative electrode active material was 90:10.

A negative electrode and a half-cell battery were made in the same manner as in Example 15 using the prepared first negative electrode active material.

Comparative Example 13

A negative electrode plate and a half-cell battery were made in the same manner as in Example 15, except that carboxymethyl cellulose (CMC) (D-2) was used instead of the (meth)acrylic binder in Example 15.

**Comparative Example 14**

A negative electrode plate and a half-cell battery were made in the same manner as in Example 15, except that carboxymethyl cellulose was used instead of the (meth)acrylic binder in Example 15 and the weight ratio of each of the components was changed as shown in Table 3 below.

**Experimental Example 5: Evaluation of first negative electrode active material**

The pellet density (g/cc); the orientation degree: the d002 (Å); the sphericity; and mercury cumulative pore volume (mL/g) were evaluated in the same manner as in Experimental Example 1.

**Experimental Example 6: Evaluation of battery characteristics**

The half-cell battery was charged and discharged at 0.1C, and the discharge capacity was measured. The measured discharge capacity is shown in Table 1, and the charge-discharge efficiency (discharge capacity/charge capacity %) was also measured.

The half-cell battery was subjected to a 0.2 C constant current (CC) and constant voltage (CV) charge and one 0.2 C discharge, a 0.5 C constant current (CC) charge and one 0.2 C discharge, a 1C constant current (CC) charge and one 0.2 C discharge, and a 2C constant current (CC) charge and one 0.2 C discharge. The charging characteristics were calculated using the following conditions: a 10 mV cutoff for the CC (constant current) section and a 15-hour cutoff for the CV (constant voltage) section. The discharge conditions were a 1.5 V cutoff. The charging characteristics were measured at each C-rate. The charging characteristic results were calculated and expressed as the ratio of 2 C CC charging capacity to 0. 2C CC charging capacity.

<u>Energy density (Wh/L):</u>

The energy density is a value obtained by dividing the product of the discharge capacity calculated by discharging at a C-rate of 0.1 C to 1 C in the operating voltage range of a battery cell and the average voltage of the corresponding cell by the volume of the cell. The energy density made be calculated as follows:

$$\text{Cell capacity (Ah) x Cell average voltage (V))/Cell volume (L)}$$

<u>Boost charging time (seconds):</u>

The boost charging time refers to the time taken to charge from 8 to 80 % SOC through constant current charging, and the boost charging time was evaluated by identifying a charging pattern that does not reach the upper voltage limit of 4.2 V during charging.

<u>Boost charging life (cycle):</u>

Once the boost charging time was determined, a large cell was evaluated for one cycle, with charging from 8 to 80 % SOC (state of charge) and discharging at a discharge voltage of 2.8 V and a constant current of 0.33 C, until the SOH (state of health) reached 8 0%.

<u>Expansion rate (%)</u>

The expansion rate was measured using a thickness monitoring system (TMS) method.

The thicknesses of the cells made according to the examples and comparative examples were evaluated in real time while charging/discharging (0.5 C/0.5 C) at 45 °C under the conditions of a charge voltage of 4.35 V and a discharge voltage of 2.8 V so as to evaluate the increase in thickness after 50 cycles compared to the thickness after 1 cycle.

The expansion rate was calculated according to the formula: Expansion rate = (Cell thickness after 50 cycles - Cell thickness after 1 cycle)/Cell thickness after 1 cycle * 100

[Table 3-1]

| | | Examples | | | | | |
|---|---|---|---|---|---|---|---|
| | | 15 | 16 | 17 | 18 | 19 | 20 |
| First negat ive electr ode activ e mate rial | Major axis length of primary particles | 30 | 30 | 30 | 30 | 30 | 30 |
| | D50 of secondary particles | 7 | 10 | 5 | 7 | 7 | 7 |
| | Pellet density | 1.75 | 1.80 | 1.60 | 1.75 | 1.75 | 1.75 |
| | Orientatio n degree | 60 | 80 | 55 | 60 | 60 | 60 |
| | d002 | 3.3569 | 3.3567 | 3.3573 | 3.3569 | 3.3569 | 3.3569 |
| | Sphericity | 0.95 | 0.95 | 0.90 | 0.95 | 0.95 | 0.95 |
| | Mercury cumulativ e pore volume | 0.035 | 0.041 | 0.037 | 0.035 | 0.035 | 0.035 |
| Third negative electrode active material | | C-1 | C-1 | C-1 | C-1 | C-1 | C-2 |
| Binder | | D-1 | D-1 | D-1 | D-1 | D-1 | D-1 |
| Binder content | | 2.5 | 2.5 | 2.5 | 2.5 | 2.5 | 2.5 |
| Weight ratio | | 47:47:6 | 47:47:6 | 47:47:6 | 45:45: 10: | 48:48: 4 | 47:47:6 |
| Energy density (Wh/L) | | 750 | 752 | 740 | 770 | 745 | 745 |
| Boost charging time (seconds) | | 900 | 960 | 780 | 840 | 930 | 960 |
| Boost charging life (cycle) | | 1,600 | 1,300 | 1,600 | 1,500 | 1,700 | 1,500 |
| Expansion rate (%) | | 5 | 3 | 7 | 9 | 3 | 8 |

[Table 3-2]

| | | Comparative Example | | | | |
|---|---|---|---|---|---|---|
| | | 10 | 11 | 12 | 13 | 14 |
| First negat ive electr ode activ e mate rial | Major axis length of primary particles | 30 | 120 | 7 | 30 | 30 |
| | D50 of secondary particles | 7 | 20 | 15.6 | 7 | 7 |
| | Pellet density | 1.9 | 1.8 | 1.78 | 1.75 | 1.75 |
| | Orientatio n degree | 70 | 110 | 120 | 60 | 60 |
| | d002 | 3.3558 | 3.3569 | 3.3561 | 3.3569 | 3.3569 |
| | Sphericity | 0.95 | 0.95 | 0.95 | 0.95 | 0.95 |
| | Mercury cumulativ e pore volume | 0.158 | 0.065 | 0.066 | 0.035 | 0.035 |
| Third negative electrode active material | | C-1 | C-1 | C-1 | C-1 | C-1 |
| Binder | | D-1 | D-1 | D-1 | D-2 | D-2 |
| Binder content | | 2.5 | 2.5 | 2.5 | 2.5 | 2.5 |
| Weight ratio | | 47:47:6 | 47:47:6 | 47:47:6 | 47:47:6 | 45:45: 10: |
| Energy density (Wh/L) | | 750 | 750 | 730 | 750 | 755 |

(continued)

| | Comparative Example | | | | |
|---|---|---|---|---|---|
| Boost charging time (seconds) | 1,200 | 1,800 | 1,080 | 960 | 960 |
| Boost charging life (cycle) | 1,100 | 600 | 900 | 800 | 600 |
| Expansion rate (%) | 15 | 9 | 10 | 19 | 30 |

In Table 3-1 and 3-2:

C-1: Silicon-carbon composite
C-2: Silicon-carbon composite
D-1: (Meth)acrylic binder
D-2: Carboxymethylcellulose
Weight ratio: Weight ratios of first negative electrode active material to second negative electrode active material to third negative electrode active material based on 100 parts by weight of negative electrode active material

As shown in Table 3 above, the negative electrode plates of the examples had high energy density, a low boost charging time and expansion rate, and a long boost charging life. Thus, the examples exhibited high energy density, a long lifespan, high C-rate charging characteristics, and improved electrode plate expansion characteristics.

However, as shown in Table 3 above, Comparative Example 10, which did not include the first negative electrode active material of the present disclosure, had poor electrode plate expansion characteristics and was poor in terms of boost charging life and boost charging time. Comparative Examples 11 and 12, which did not include the first negative electrode active material of the present disclosure, had poor boost charging life. Comparative Examples 13 and 14, which did not include the (meth)acrylic binder of the present invention, had poor electrode plate expansion characteristics and poor boost charging life.

The negative electrode plate for a rechargeable lithium battery according to embodiments of the present disclosure can provide high energy density, a long lifespan, and a boost charging effect, and thus exhibit excellent rechargeable lithium battery performance.

Although the preferred embodiments of the present disclosure have been described above, the present disclosure is not limited to these examples. Therefore, it should be understood that various changes and modifications can be made within the scope of the detailed description of the present disclosure.

## Claims

**1.** A negative electrode plate for a rechargeable lithium battery comprising a negative electrode active material and a binder,

wherein the negative electrode active material includes a mixture of a first negative electrode active material, a second negative electrode active material, and a third negative electrode active material,
wherein the first negative electrode active material includes natural graphite including secondary particles each formed from primary particles, with an amorphous carbon coating layer surrounding the secondary particles, and with the first negative electrode active material having an orientation degree of 90 or less and a d002 of 3.356 Å to 3.360 Å,
wherein the second negative electrode active material is graphite,
wherein the third negative electrode active material includes one or more of the following (i), (ii), and (iii):

(i) a negative electrode active material including a core including silicon nanoparticles and amorphous carbon, with an amorphous carbon coating layer surrounding the core;
(ii) a negative electrode active material including a composite of silicon and crystalline carbon, with an amorphous carbon coating layer formed on a surface of the composite and including amorphous carbon; and
(iii) a negative electrode active material including silicon nanoparticles and an amorphous carbon coating

layer disposed on surfaces of the silicon nanoparticles and the negative electrode active material having a sphericity of 0.9 to 1.0, and

wherein the binder includes a (meth)acrylic binder.

**2.** The negative electrode plate of claim 1, wherein the first negative electrode active material has a mercury cumulative pore volume of 0.01 mL/g to 0.06 mL/g.

**3.** The negative electrode plate of claim 1 or 2, wherein the first negative electrode active material has a pellet density of 1.60 g/cc to 1.80 g/cc.

**4.** The negative electrode plate of any of the preceding claims, wherein the first negative electrode active material has a sphericity of 0.85 or greater.

**5.** The negative electrode plate of any of the preceding claims, wherein the ratio of a major axis length of the primary particles to an average particle diameter (D50) of the secondary particles is greater than 2 and less than or equal to 10.

**6.** The negative electrode plate of any of the preceding claims, wherein the primary particles have a plate-like shape and the secondary particles have a spherical shape.

**7.** The negative electrode plate of any of the preceding claims, wherein the primary particles have a major axis length of 10 $\mu$m to 200 $\mu$m.

**8.** The negative electrode plate of any of the preceding claims, wherein the secondary particles have an average particle diameter (D50) of 30 $\mu$m or less.

**9.** The negative electrode plate of any of the preceding claims,

- wherein amorphous carbon is formed on surfaces of the primary particles; and/or
- wherein the amorphous carbon is a mixture of one or more of soft carbon, hard carbon, mesophase pitch carbide, and calcined coke.

**10.** The negative electrode plate of any of the preceding claims,

- wherein the natural graphite and the amorphous carbon are included in a weight ratio of 90:10 to 75:25 based on a total of 100 parts by weight of the natural graphite and the amorphous carbon in the first negative electrode active material; and/or
- wherein the second negative electrode active material is artificial graphite having a D50 of 10 $\mu$m to 20 $\mu$m, a pellet density of 1.1 g/cc to 1.6 g/cc, a specific surface area of 10 $m^2$/g or less, and an orientation degree of 90 or greater.

**11.** The negative electrode plate of any of the preceding claims,

- wherein an interparticle distance between the silicon nanoparticles included in the core of the negative electrode active material (i) is 100 nm or less; and/or
- wherein an average particle diameter (D50) of the silicon nanoparticles in the negative electrode active material (i) is from 50 nm to 150 nm; and/or
- wherein the negative electrode active material (i) has a total pore volume of pores with a size of 200 nm or less of $3.0 \times 10^{-2}$ $cm^3$/g or less; and/or
- wherein, in the negative electrode active material (i), the silicon nanoparticles and the amorphous carbon are included in a weight ratio of 80:20 to 20:80 based on a total of 100 parts by weight of the silicon nanoparticles and the amorphous carbon.

**12.** The negative electrode plate of any of the preceding claims,

- wherein the negative electrode active material (ii) has an aspect ratio of 1 to 2.5; and/or
- wherein, in the negative electrode active material (ii), the silicon is included in an amount of 20 % to 70 % by weight, the crystalline carbon is included in an amount of 3 % to 50 % by weight, and the amorphous carbon is

included in an amount of 20 % to 50% by weight.

**13.** The negative electrode plate of any of the preceding claims,

- wherein the negative electrode active material (iii) includes pores, and the pores include mesopores; and/or
- wherein the negative electrode active material (iii) further includes a polymer layer disposed on the amorphous carbon coating layer, preferably wherein the polymer layer includes polyvinyl alcohol and polyacrylic acid; and/or
- wherein the negative electrode active material (iii) has a ratio of mesopore volume to total pore volume of the third negative electrode active material of 30% or more and less than 70%; and/or
- wherein the negative electrode active material (iii) has a span value of 1.1 to 1.6 according to the following Equation 2:

[Equation 2]

$$\text{Span} = (D90-D10)/D50$$

wherein:

D10 represents a particle size of negative electrode active material particles (iii) having a cumulative volume of 10% by volume in a particle size distribution,
D50 represents a particle size of negative electrode active material particles (iii) having a cumulative volume of 50% by volume in a particle size distribution, and
D90 represents a particle size of negative electrode active material particles (iii) having a cumulative volume of 90 % by volume in a particle size distribution.

**14.** The negative electrode plate of any of the preceding claims,

- wherein the first negative electrode active material is included in an amount of 20 % to 75 % by weight, the second negative electrode active material is included in an amount of 20 % to 75 % by weight, and the third negative electrode active material are included in an amount of 1 % to 20 % by weight; and/or
- wherein the (meth)acrylic binder contains a unit derived from a (meth)acrylic acid-based monomer and a unit derived from a (meth)acrylic monomer having a cyano group; and/or
- wherein the (meth)acrylic binder is included in an amount of 0.5 % to 5 % by weight in the negative electrode plate..

**15.** A rechargeable lithium battery comprising the negative electrode plate for a rechargeable lithium battery of any of the preceding claims and a positive electrode.

FIG. 1.

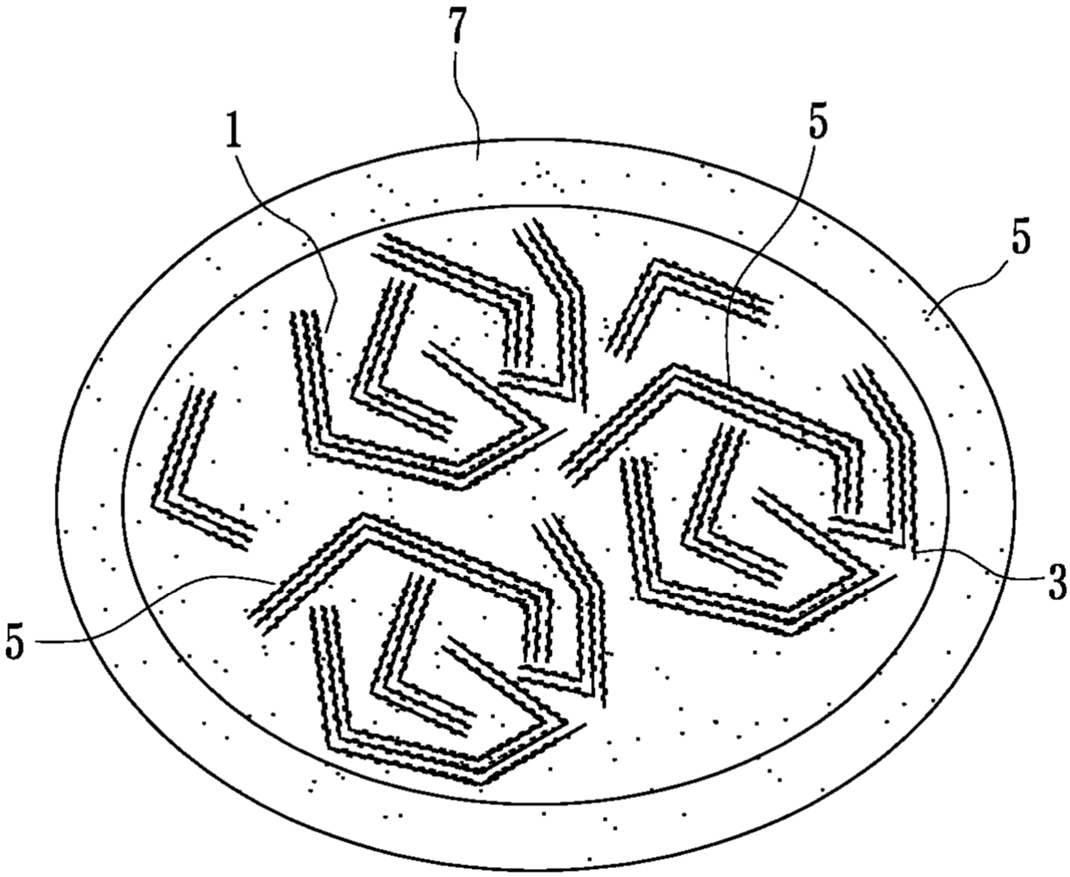

FIG. 2.

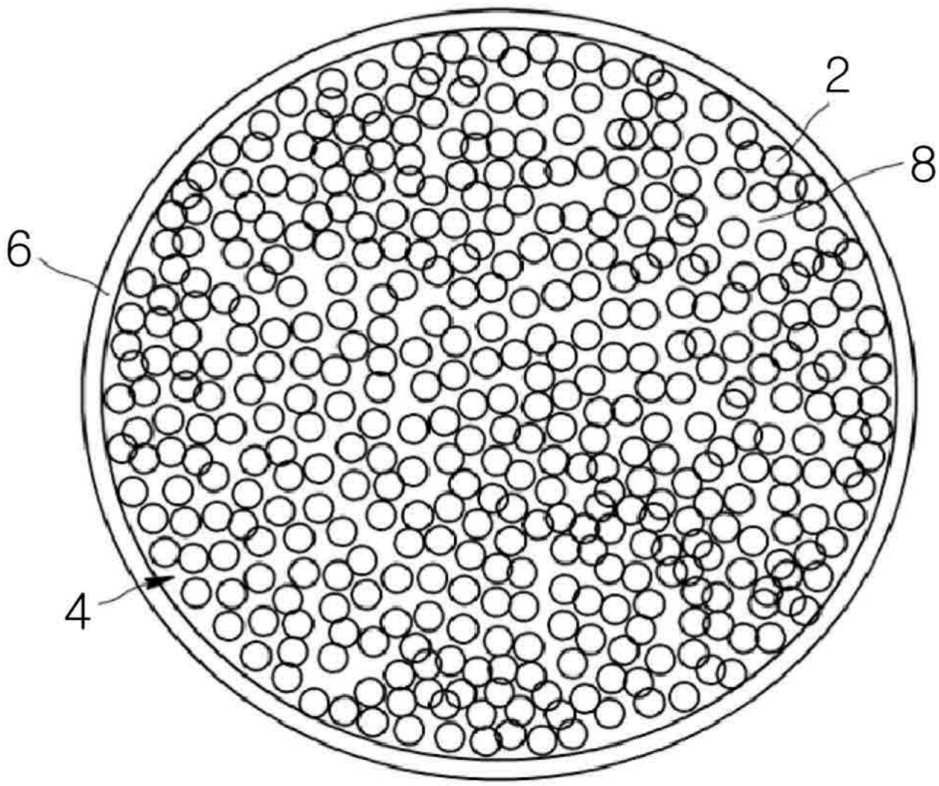

FIG. 3.

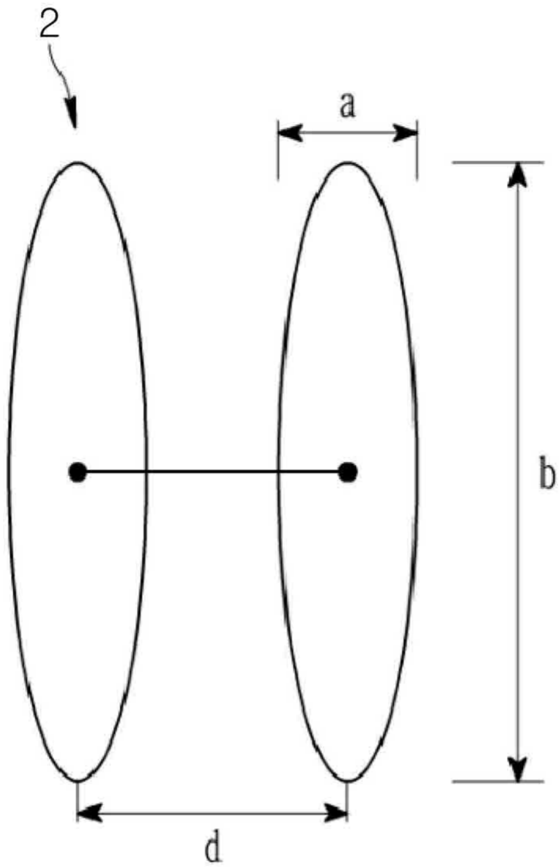

FIG. 4.

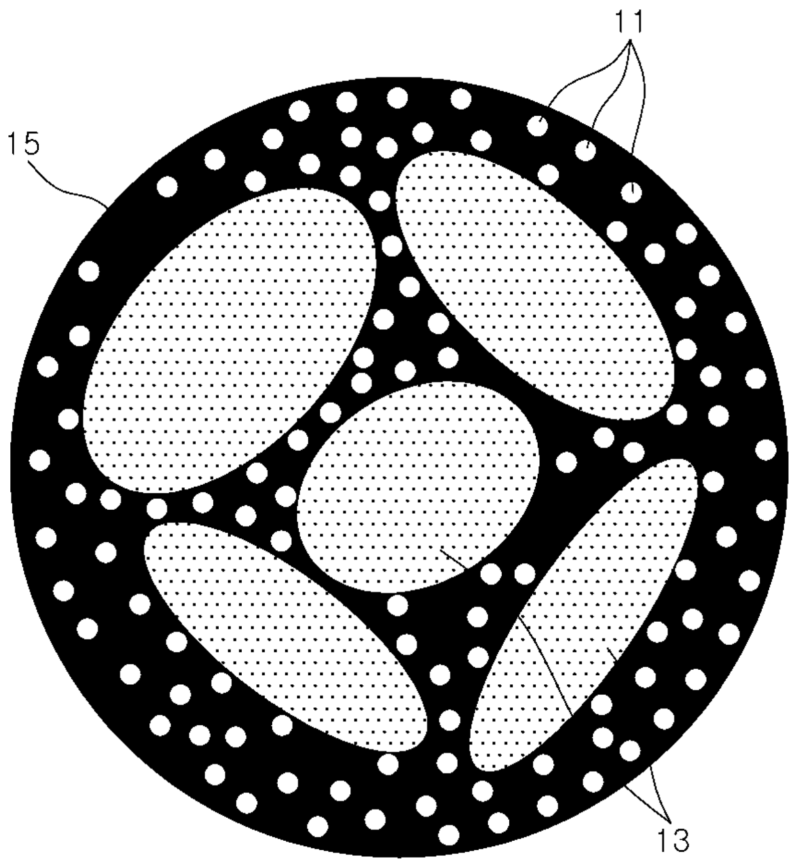

FIG. 5.

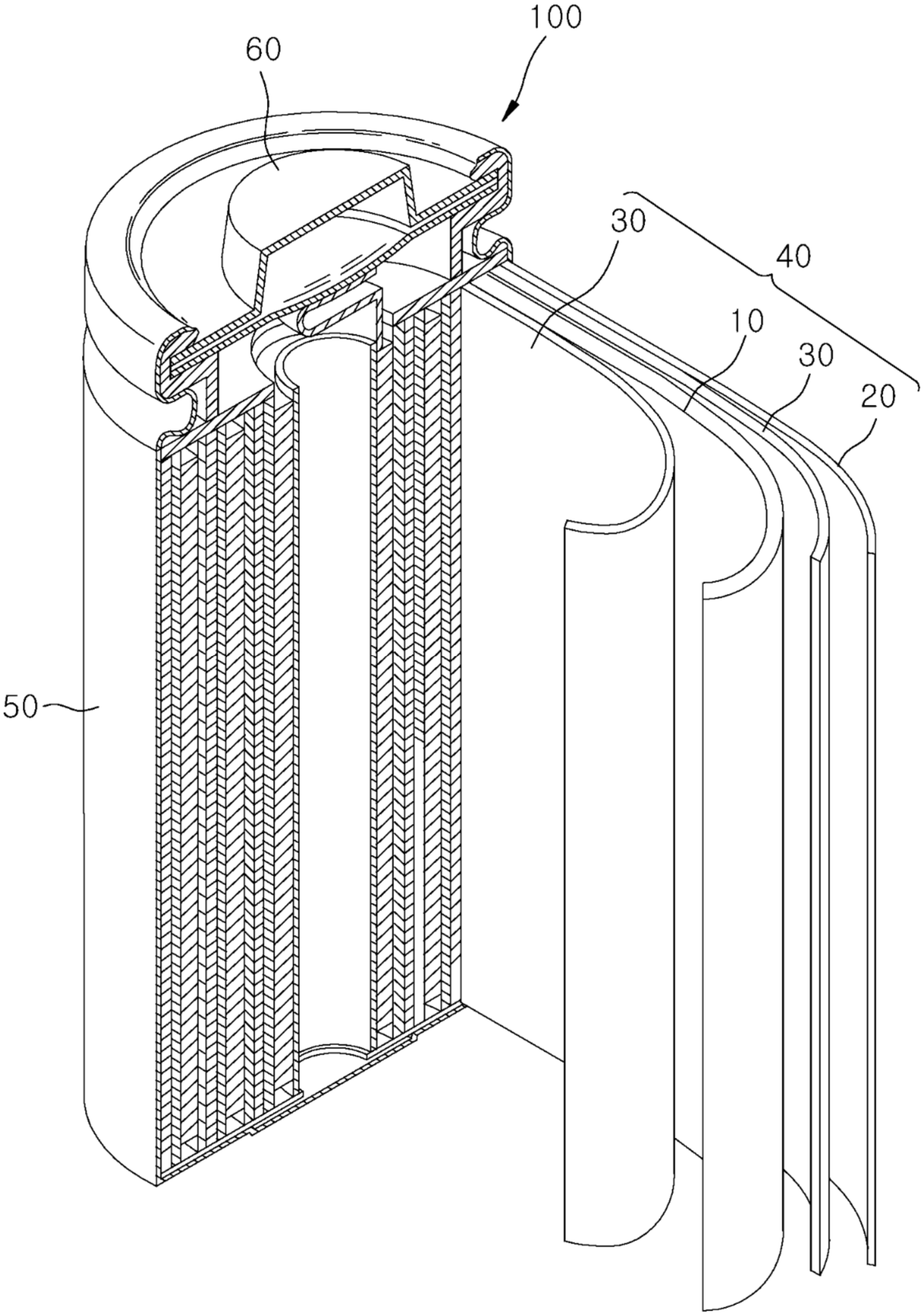

FIG. 6.

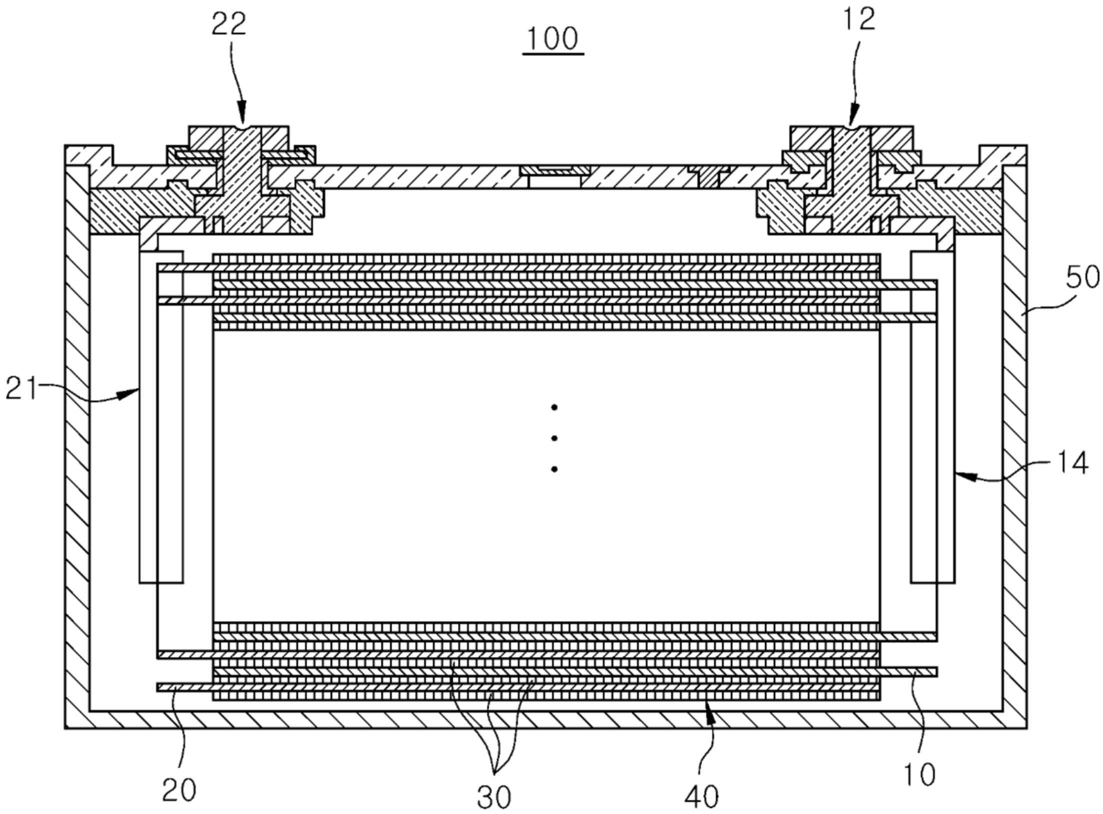

FIG. 7.

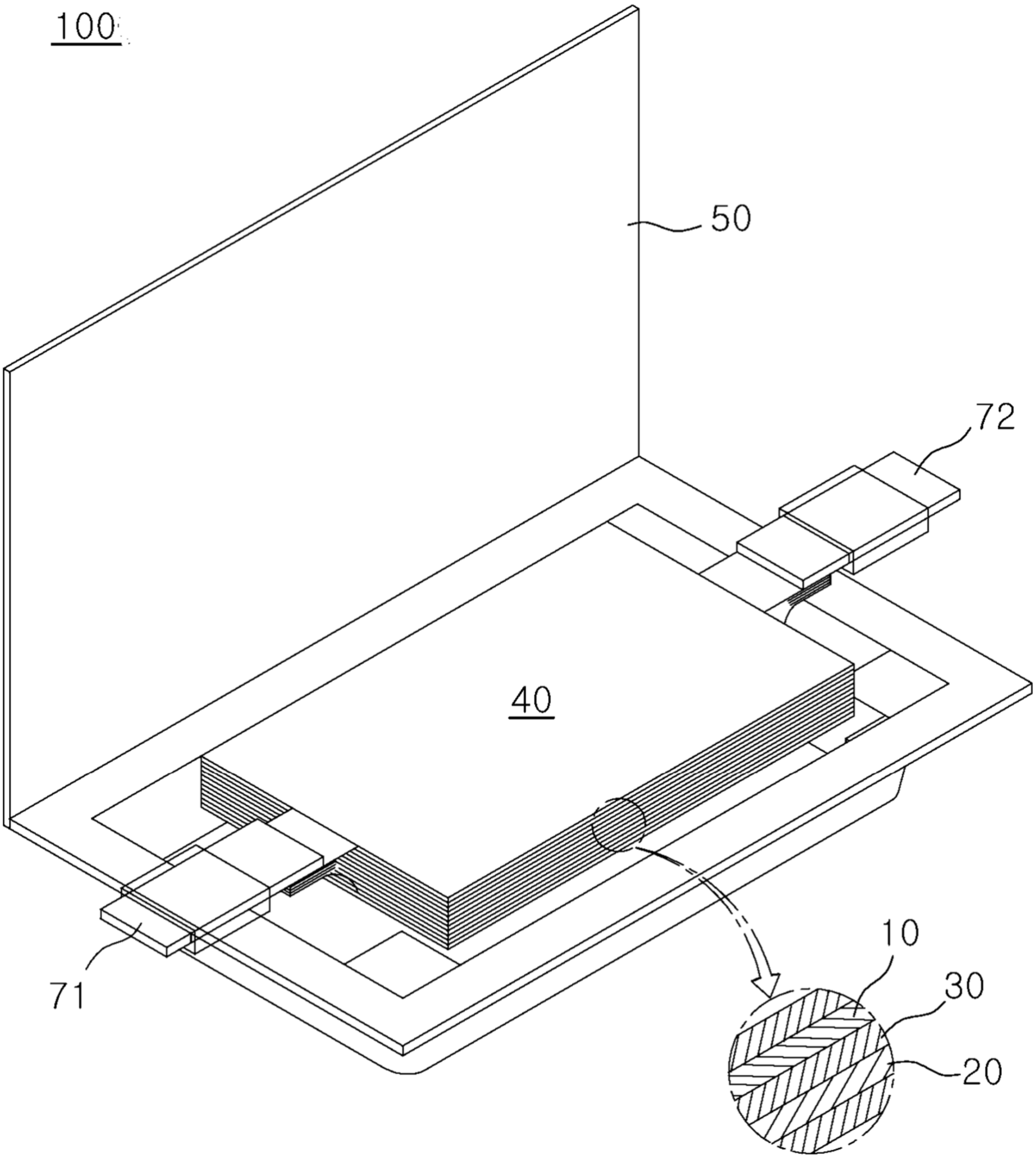

FIG. 8.

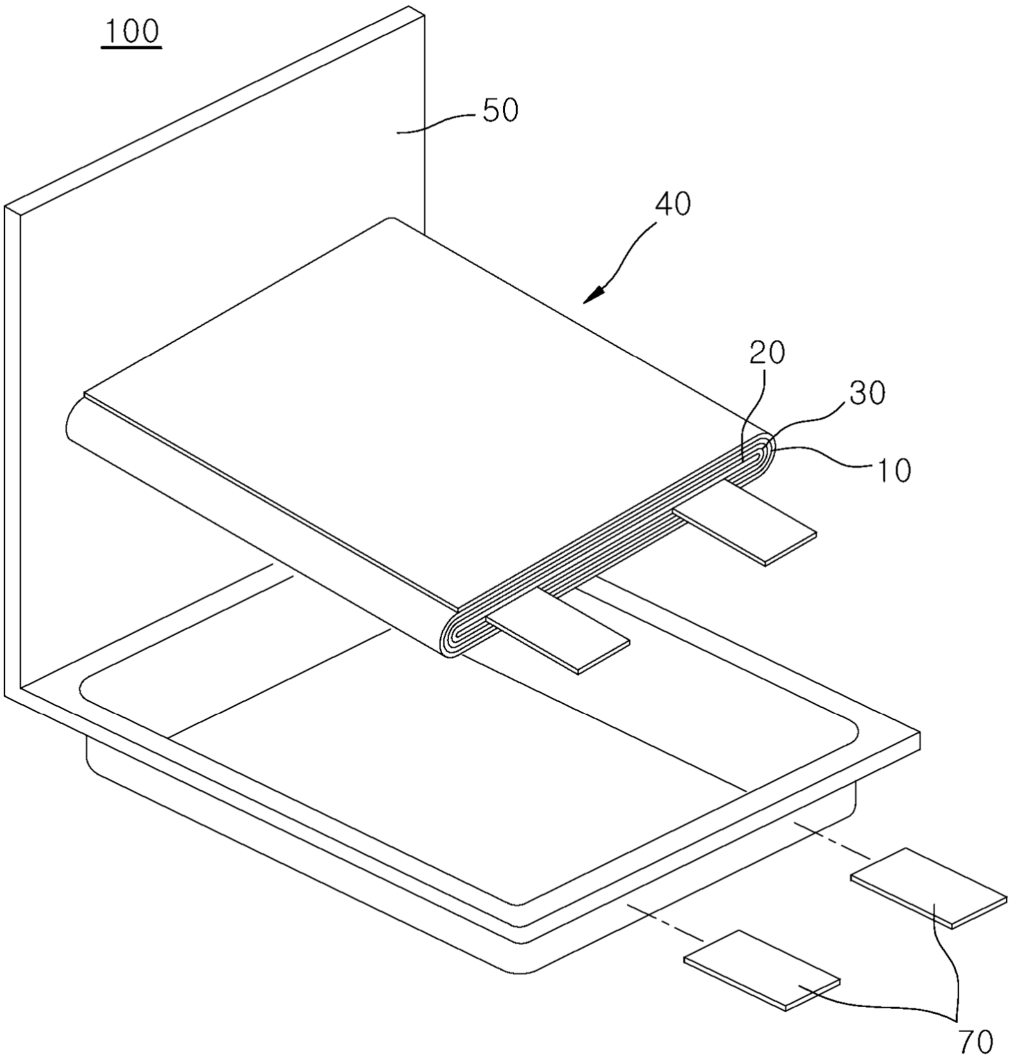

Europäisches Patentamt
European Patent Office
Office européen des brevets

# EUROPEAN SEARCH REPORT

Application Number
EP 25 21 9380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 228 025 A1 (SAMSUNG SDI CO LTD [KR]) 16 August 2023 (2023-08-16) | 1,2,4-9, 11,12, 14,15 | INV. H01M4/36 H01M4/134 H01M4/38 H01M4/587 H01M4/62 |
| Y | * paragraph [0024] - paragraph [0028] * * paragraph [0033] - paragraph [0060] * * paragraph [0089] - paragraph [0095] * ----- | 3,10,13 | |
| Y | EP 4 266 397 A1 (SAMSUNG SDI CO LTD [KR]) 25 October 2023 (2023-10-25) * paragraph [0020] - paragraph [0023] * * paragraph [0029] - paragraph [0034] * ----- | 3 | |
| Y | JP 2013 222551 A (SUMITOMO BAKELITE CO) 28 October 2013 (2013-10-28) * page 5, paragraph 4 - page 6, paragraph 3 * ----- | 10 | |
| Y | JP 2008 277232 A (HITACHI CHEMICAL CO LTD) 13 November 2008 (2008-11-13) | 13 | |
| A | * paragraph [0041] - paragraph [0042] * ----- | 1,14 | TECHNICAL FIELDS SEARCHED (IPC) |
| A | US 2019/355971 A1 (KIM YOUNG-MIN [KR]) 21 November 2019 (2019-11-21) * the whole document * ----- | 1-15 | H01M |
| A | EP 4 451 364 A1 (SAMSUNG SDI CO LTD [KR]) 23 October 2024 (2024-10-23) * the whole document * ----- | 1-15 | |
| A | US 2021/391570 A1 (HAN JUN HEE [KR] ET AL) 16 December 2021 (2021-12-16) * the whole document * ----- | 1-15 | |

The present search report has been drawn up for all claims

3

| Place of search | Date of completion of the search | Examiner |
|---|---|---|
| The Hague | 21 May 2026 | Iglesias van M., H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 21 9380

This annex lists the patent family members relating to the patent documents cited in the above-mentioned European search report. The members are as contained in the European Patent Office EDP file on
The European Patent Office is in no way liable for these particulars which are merely given for the purpose of information.

21-05-2026

| Patent document cited in search report | | Publication date | Patent family member(s) | | Publication date |
|---|---|---|---|---|---|
| EP 4228025 | A1 | 16-08-2023 | EP 4228025 | A1 | 16-08-2023 |
| | | | KR 20230119523 | A | 16-08-2023 |
| | | | US 2023253553 | A1 | 10-08-2023 |
| EP 4266397 | A1 | 25-10-2023 | EP 4266397 | A1 | 25-10-2023 |
| | | | JP 2024515948 | A | 11-04-2024 |
| | | | KR 20230030409 | A | 06-03-2023 |
| | | | US 2024120461 | A1 | 11-04-2024 |
| | | | US 20260074187 | A1 | 12-03-2026 |
| | | | WO 2023027431 | A1 | 02-03-2023 |
| JP 2013222551 | A | 28-10-2013 | NONE | | |
| JP 2008277232 | A | 13-11-2008 | NONE | | |
| US 2019355971 | A1 | 21-11-2019 | CN 110504420 | A | 26-11-2019 |
| | | | KR 20190132026 | A | 27-11-2019 |
| | | | US 2019355971 | A1 | 21-11-2019 |
| | | | US 2024097102 | A1 | 21-03-2024 |
| | | | US 2025105256 | A1 | 27-03-2025 |
| EP 4451364 | A1 | 23-10-2024 | CN 118825214 | A | 22-10-2024 |
| | | | EP 4451364 | A1 | 23-10-2024 |
| | | | KR 20240153838 | A | 24-10-2024 |
| | | | US 2024347704 | A1 | 17-10-2024 |
| US 2021391570 | A1 | 16-12-2021 | CN 113809283 | A | 17-12-2021 |
| | | | KR 20210155609 | A | 23-12-2021 |
| | | | KR 20260018138 | A | 06-02-2026 |
| | | | US 2021391570 | A1 | 16-12-2021 |
| | | | US 2025336957 | A1 | 30-10-2025 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020240175706
- KR 1020240175707
- KR 1020240175711